# EUROPEAN PATENT SPECIFICATION

(11) **EP 3 084 327 B1**
(45) Date of publication and mention of the grant of the patent: **09.06.2021**
(21) Application number: 14871727.5
(22) Date of filing: 22.12.2014
(51) Int. Cl.: F25D 29/00, G05D 23/00, F25B 49/00, G05B 15/02

(54) **A METHOD OF CONTROLLING A NETWORK OF REFRIGERATION SYSTEMS, AN APPARATUS FOR MANAGING REPAIR OF A REFRIGERATION SYSTEM AND A RELATED PROCESSOR-READABLE STORAGE MEDIUM**
EIN VERFAHREN ZUR STEUERUNG EINES NETZWERKS VON KÜHLSYSTEMEN, EINE VORRICHTUNG ZUR VERWALTUNG DER REPARATUR EINES KÜHLSYSTEMS UND EIN ZUGEHÖRIGES PROZESSORLESBARES SPEICHERMEDIUM
UNE MÉTHODE DE CONTRÔLE D'UN RÉSEAU DE SYSTÈMES DE RÉFRIGÉRATION, UN APPAREIL POUR GÉRER LA RÉPARATION D'UN SYSTÈME DE RÉFRIGÉRATION ET UN MEDIUM DE MÉMOIRE ASSOCIÉ LISIBLE PAR UN PROCESSEUR

(30) Priority: 20.12.2013 US 201361919642 P; 01.08.2014 US 201462032464 P
(43) Date of publication of application: 26.10.2016
(73) Proprietor: Klatu Networks, Inc., Poulsbo, WA 98370 (US)
(72) Inventor: KRISS, Richard, Poulsbo, WA 98370 (US); SIMPSON, Daniel, Poulsbo, WA 98370 (US); EXLINE, Christopher, Lee, Poulsbo, WA 98370 (US); LARSSON, Peter, Christopher, Poulsbo, WA 98370 (US)
(74) Representative: Purdylucey Intellectual Property
(86) International application number: PCT/US2014/071979
(87) International publication number: WO 2015/095887

(56) References cited:
- US-A1- 2011 224 947
- US-A1- 2011 224 947
- US-A1- 2012 019 378
- US-A1- 2012 271 576
- US-A1- 2013 311 437
- US-B2- 7 908 875
- US-B2- 8 599 008
- US-B2- 8 599 008

## Description

### BACKGROUND

### Field

The present invention relates generally to management of refrigeration systems (assets) and more particularly to remote management of operational, monitoring, maintenance and repair processes associated with installations comprising large numbers of refrigeration systems (assets).

### Background

Refrigeration equipment tends to suffer a loss of operating efficiency over time due to manufacturing defects, mechanical degradation, adverse environmental factors, deferred maintenance or simple misconfiguration. Research in Life Science applications indicates that 30-50% of all commercial refrigeration equipment operates out of specification with 10-15% showing signs of eminent mechanical failure at any time, even where the commercial refrigeration equipment is well-maintained.

Determining the state-of-health for a refrigeration system is not easy. Current industry best practices have not changed in 50 years and often rely on a fail-and-fix repair model, whereby repairs are applied only after the equipment fails. This approach results in the highest possible repair costs for assets that fail, decreasing reliability for assets that have not yet failed, and sub-optimal management of assets in terms of energy, maintenance costs and risk factors such as mechanical failure.

In an attempt to mitigate these cost and risk factors, periodic and costly preventive maintenance inspections are often scheduled in an attempt to determine *a-priori* whether a refrigeration system has an operational deficiency and requires additional maintenance. These inspections are labor intensive, costly and most often ineffective. Inspections are costly because an entire population of refrigeration assets must be inspected even though only a percentage might require repair or maintenance. Inspections are ineffective because most refrigeration problems are difficult to detect without continuous real-time monitoring and analytical tools not common or affordable in the industry today.

For lack of an affordable option to detect refrigeration problems, some operators adopt the costly mitigation strategy of replacement of refrigeration assets after five years of service, even though there may be nothing wrong with some refrigeration assets.

Ultra-Low Temperature (ULT) freezers commonly deployed in Life Science applications, for example, operate at extremely low temperatures (-80°C). Each ULT may consume the equivalent energy of an entire house, and can account for 25-30% of all electricity consumed in many university research and pharmaceutical manufacturing facilities. This is confirmed by US Government data indicating that Life Science research and manufacturing facilities consume 2x to 8x more energy than commercial office buildings. In addition to wasted energy, the unexpected failure of a ULT Freezer in a Life Science application can result in the catastrophic loss of high-value, mission critical research specimens or pharmaceuticals.

The refrigeration and air conditioning repair industry produces more than $2.5 billion in revenues annually, employs more than 38,000 repair technicians who continue to use "fail and fix" repair methods that have been substantially unchanged for 50 or more years. The refrigeration industry is also coming under increased regulation by the governmental agencies through programs such as the Energy Star™ program in the United States, which seek to drive adoption new energy technologies into the market.

One of the largest sources of wasted energy in existing refrigeration equipment can be attributed to diminished state of health and repair, which are highly correlated with energy efficiency. For lack of affordable tools, many repairs are not effective or persistent over time, with the common result that 20%-50% of all energy consumed by poor performing equipment is wasted. More often than not, this waste is due to inadequate diagnostics systems, and poor skills and repair techniques of the Service Provider. Therefore there is a need for improved asset management systems applicable to refrigeration assets. US Patent Publication No. 8,599,008 B2 describes an appliance monitoring system and method, where if a failure mode of a component of an appliance is detected, a service protocol corresponding to the component is initiated. Moreover, US Patent Publication No. 8,599,008 B2 discloses a method of controlling a network of refrigeration systems according to the preamble of claim 1 and an apparatus for managing repair of a refrigeration system according to the preamble of claim 10. US Patent Publication No. US 2011/224947 describes systems and methods for monitoring, inferring state of health, and optimizing efficiency of refrigeration systems. US Patent Publication No. US 2012/019378 describes an appliance monitoring system and method. US Patent Publication No. US 2012/271576 describes systems and methods for analyzing energy usage. US Patent Publication No. 2013/311437 describes a system and method for performance monitoring of a population of equipment.

### SUMMARY

The invention and its particular embodiments for which protection is sought are defined by the appended claims. Certain aspects of the present invention provided improved asset management systems and technology that are based on proactive predict and prevent methods for anomaly detection, repair and post-repair monitoring of assets. Certain aspects are applicable to refrigeration systems and assets including individual refrigeration assets, refrigeration farms comprising large numbers of refrigeration assets, and/or walk-in rooms which use one or more refrigeration systems, which may be collectively referred to as refrigeration systems or refrigeration assets. Systems and methods are provided that can monitor performance of refrigerators and refrigeration assets, determine and select which refrigeration assets are in need of reconfiguration and/or repair. The repair process may be monitored, and the effectiveness of repairs may be determined after repairs are completed. Asset management technologies, systems and methods are provided that may be applicable to refrigeration assets so that the status, health and energy efficiency of these assets can be determined and monitored over time. These systems and methods may be used to support corporate or government mandated programs for reduced energy consumption and to calculate incentives and rebates attributable to energy savings based on specific utility provided criteria for calculating the persistence and amount of energy savings following repairs

According to certain aspects, a repair process may be controlled using a feedback loop by classifying, benchmarking, managing and optimizing the repair process. The effectiveness and persistence of repairs may be determined over time to establish the status and/or efficacy of a repair independently of the diagnosis made by a repair technician. The refrigeration assets may be classified according to size, type, design, in situ environment, configuration, reliability, performance, make, model and manufacturer. The effectiveness of configuration changes or repairs may be classified based on measured performance results following repairs, and service providers, including organizations, companies and/or individuals providing repair and other services, might be similarly evaluated for the effectiveness and persistence of their repair results using benchmarks and other qualitative or quantitative evaluation methods. The evaluation may be based on information derived from federated data, including data obtained from a plurality of sources and operators of large refrigeration systems (i.e. systems having many assets), and each operator may evaluate the information using comparisons of its own assets or in relation to a larger population of comparable assets of which the operator may not be aware or be able to access.

In an aspect of the invention, energy usage by refrigeration assets may be estimated. In some instances, energy usage measured or estimated prior to a repair may be used to calculate or estimate energy savings that may be accrued upon successful completion of the repair. In some instances, actual energy usage measurements and/or calculations may be used to forecast the energy savings expected after a repair. The determination of effectiveness and/or persistence of repairs may include a consideration of energy savings over time.

In an aspect of the invention, a method, a computer program product, and an apparatus are provided that can monitor refrigeration assets using wired or wirelessly connected sensors, which transmit data to an application server for analysis and benchmarking ("Performance Information"). Data is processed and measured against time or in reference to predefined benchmarks and/or norms in order to determine relative performance in reference to comparable peers of the assets as defined by query criteria, normalization or filters. The analysis and results may be represented with a visual indication, mathematical or pattern recognition function, including a sine wave or a statistical model, for example. The application server may be accessed through any web browser or web interface, and the user can have a distinct login identification and password.

### BRIEF DESCRIPTION OF THE DRAWINGS

FIG. 1 illustrates a system configured to monitor a plurality of assets equipped with sensors in accordance with certain aspects disclosed herein.
FIG. 2 illustrates a refrigeration system instrumented with sensors and other monitoring circuitry according to certain aspects disclosed herein.
Fig. 3 illustrates a system for managing a network of refrigeration assets according to certain aspects disclosed herein.
Fig. 4 illustrates a smart sensor according to certain aspects disclosed herein.
Fig. 5 illustrates a routable network accessed by a smart sensor according to certain aspects disclosed herein.
FIG. 6 is a state diagram illustrating a workflow managed by certain aspects disclosed herein.
FIG. 7
FIG. 8

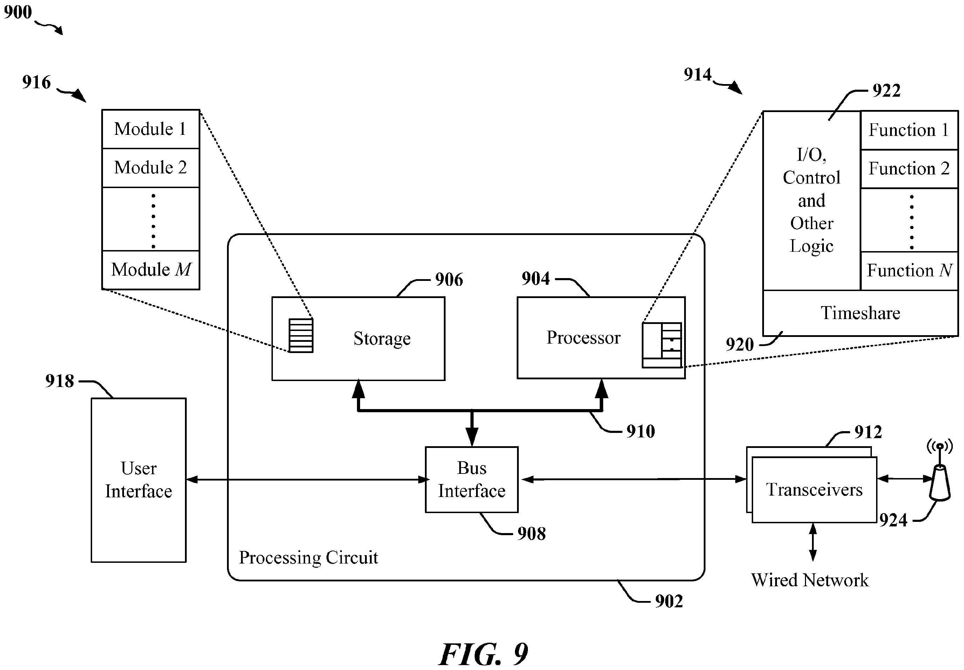

FIG. 9 is a block diagram illustrating an example of an apparatus employing a processing system that may be adapted according to certain aspects disclosed herein.

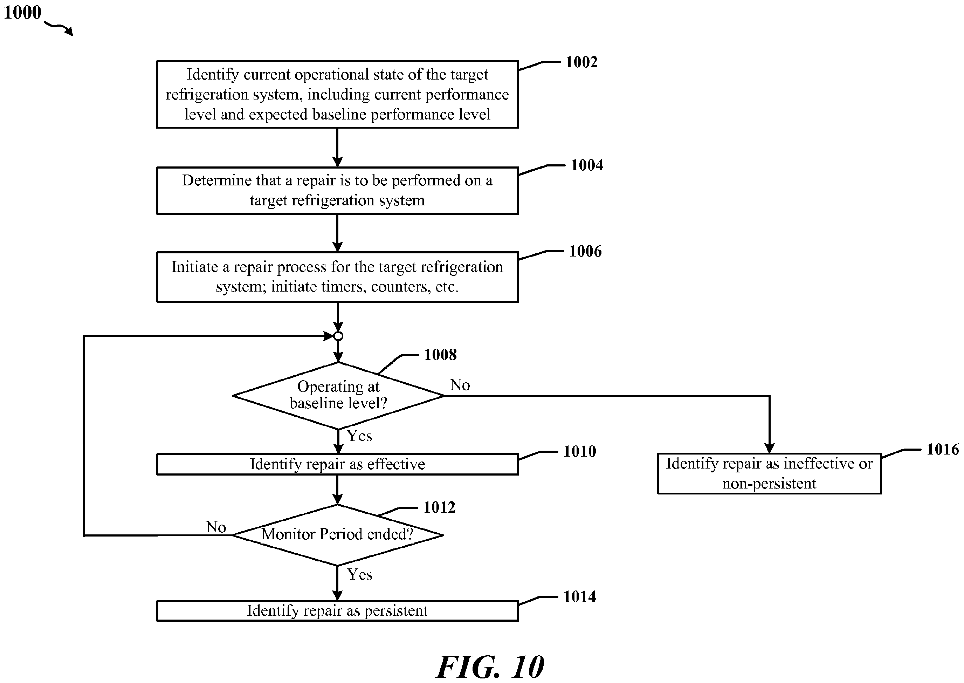

FIG. 10 is a flowchart illustrating a second example of a method of managing the effectiveness of repairs in refrigeration assets.

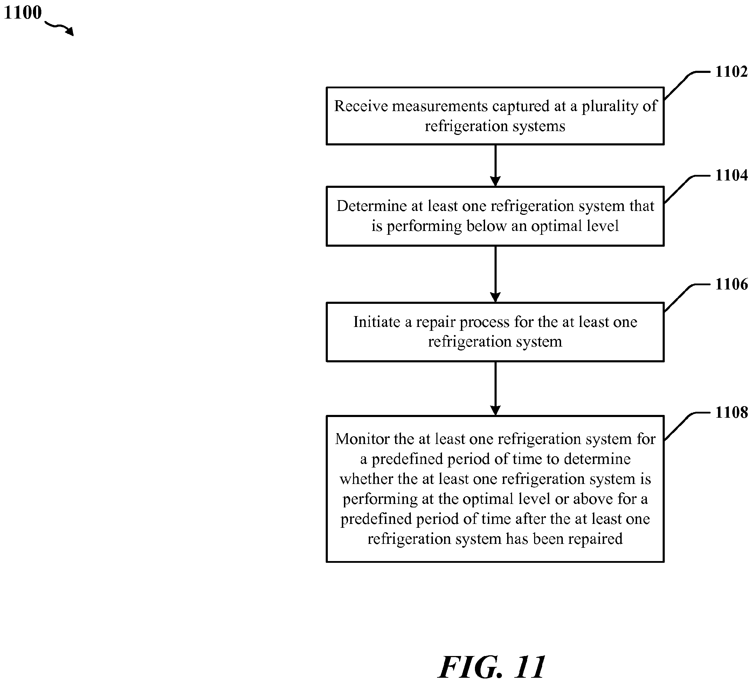

FIG. 11 is a flowchart illustrating a first example of a method of managing the effectiveness of repairs in refrigeration assets.

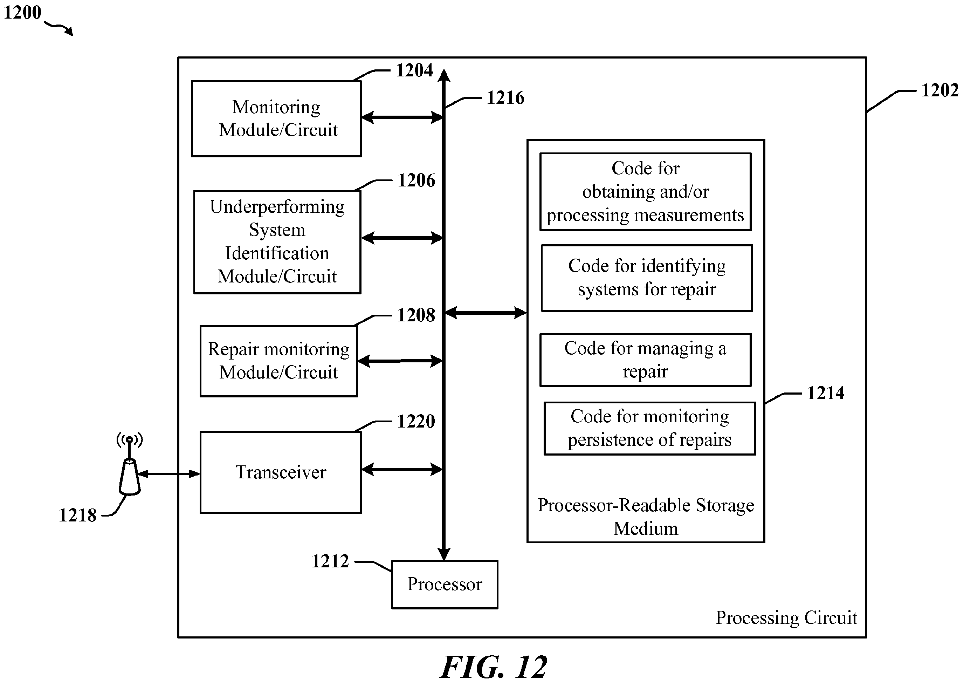

FIG. 12 is a diagram illustrating an example of a hardware implementation for an apparatus adapted to manage the effectiveness of repairs in refrigeration assets.

### DETAILED DESCRIPTION

In the following description, specific details are given to provide a thorough understanding of the various aspects of the invention. However, it will be understood by one of ordinary skill in the art that the aspects may be practiced without these specific details. For example, circuits may be shown in block diagrams in order to avoid obscuring the aspects in unnecessary detail. In other instances, well-known circuits, structures and techniques may not be shown in detail in order not to obscure the aspects of the invention. However, the scope of the invention is merely defined by the appended claims.

Various aspects of the invention relate to systems, apparatus and methods that may be used to monitor, manage, control and report on the operation of equipment that may be deployed locally or remotely and/or in large numbers. To facilitate description of certain aspects, specific details related to refrigeration and/or freezer assets will be given, and it will be understood that the aspects may be practiced without these specific details. In one example, methods, apparatus, and computer program products are described in relation to refrigeration systems and refrigeration assets, including ULT refrigerators and freezers, refrigeration plants and cold-storage facilities comprising large numbers of refrigeration assets. The performance of refrigeration systems and/or refrigeration assets may be monitored based on temperature and electrical current and other measurements known, inferred, deemed, and/or correlated with refrigeration performance. Performance may measure and/or characterize the status, heath, reliability and/or energy usage of a refrigeration asset or refrigeration system. Refrigeration assets in need of repair may be identified and a repair process may be specified, classified, managed locally or remotely, and optimized. The immediate effectiveness and long-term persistence of repairs and energy savings may be determined over time. The refrigeration assets may be classified, scored, and/or rated according to normalized data, design, reliability, performance, make, model and manufacturer. The effectiveness of repairs may be classified based on measured performance results following repairs. The equipment or service providers, including organizations, companies or individuals providing repair and other services, may be evaluated for the effectiveness and persistence of repair results using benchmarks and other qualitative or quantitative evaluation methods.

Certain aspects of the present may be described in relation to a variety of types of refrigeration assets, including refrigeration farms comprising large numbers of refrigeration assets. Systems and methods are described that may be used to monitor and analyze performance of refrigeration assets, and can identify and select refrigeration assets in need of repair. In certain embodiments, a repair process may be specified, scored, classified, managed and optimized. The immediate effectiveness and long-term persistence of repairs and energy savings may be determined over time. The refrigeration assets may be analyzed, evaluated and classified according to type, design, *in situ* environment and/or configuration, reliability, energy efficiency, access activity, performance, make, model, manufacturer, performance or the identity of the service technician performing the repair, and other logical views.

The effectiveness of repairs and energy savings may be classified based on the measured results following repairs made by service providers, including organizations, companies and/or individuals providing repair and other services.

Certain systems and methods are provided that can determine the status and/or state-of-health of a refrigeration asset, determine the effectiveness and persistence of repairs and energy savings, identify poorly performing refrigeration assets and manage and control repair processes. Systems and methods are provided to monitor refrigeration assets using wired or wireless sensors, which transmit data to an application server for analysis and benchmarking of performance. Data may be processed and measured against time or in reference to predefined benchmarks and/or norms in order to determine relative performance in reference to selected peers as defined by query criteria, normalization, or filters. The analysis and results may be represented with a visual indication, mathematical or pattern recognition function, such as a sine wave or a statistical model. The application server may be accessed through any web browser or web interface, and the user can have a distinct login identification and password.

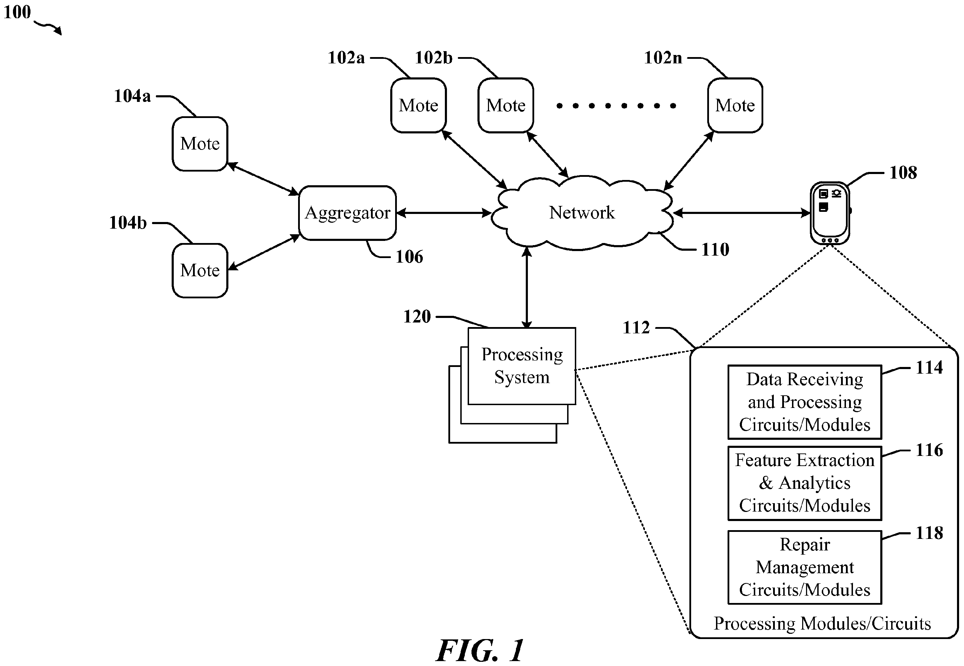

FIG. 1 is a simplified block diagram 100 illustrating a network of devices that may be deployed to monitor various types of assets. A plurality of networked devices, which may be referred to collectively herein as "Motes 102, 104," may be adapted or configured to sample data produced by one or more sensors, and to transmit the sensor data to a processing system 108, 120. In one example, the processing system 120 may include one or more processing circuits and/or systems that are accessible through a network 110, which may include the Internet. In another example, a mobile computing device 108 may be configured to enable field service personnel to interact with other portions of the processing system 120 and equipment targeted during service calls. The mobile computing device 108 may include one or more wired or wireless transceivers and/or line drivers and receivers that enable the mobile computing device 108 to communicate with certain of the Motes 102, 106, and the network 110. In some instances, the mobile computing device 108 includes or may be coupled to one or more external sensors that can be used to monitor an asset during field servicing. In some instances, the mobile computing device 108 may interface with a computing system or other intelligent device provided within a managed asset.

The processing system 108, 120 may include modules and/or circuits 112 adapted or configured to communicate with and/or control with the Motes 102, 104. For example, certain circuits and/or modules 114 may be configured to receive and process sensor data sampled by the by the Motes 102, 104, circuits and/or modules 116 configured to process the sensor data to derive sensor metrics used for determining health of assets and changes or differences in health of an asset with respect to peer assets and/or relative to prior states of the asset, and circuits and/or modules 118 configured to track repairs in the context of derived sensor metrics, and to determine the effectiveness and persistence of said repairs by analysis of features in the sensor data before and after the repair.

In the example, certain Motes 102a-102n may communicate with a network 110 using wired or wireless communications technology, while other Motes 104a, 104b may be coupled to an aggregator 106 that collects, processes and/or forwards sensor data from the Motes 104a, 104b. Each of the Motes 102, 104 may sample data from one or more sensors associated with an asset. In some instances, certain of the Motes 102, 104 may be adapted to sample data from sensors associated with two or more assets.

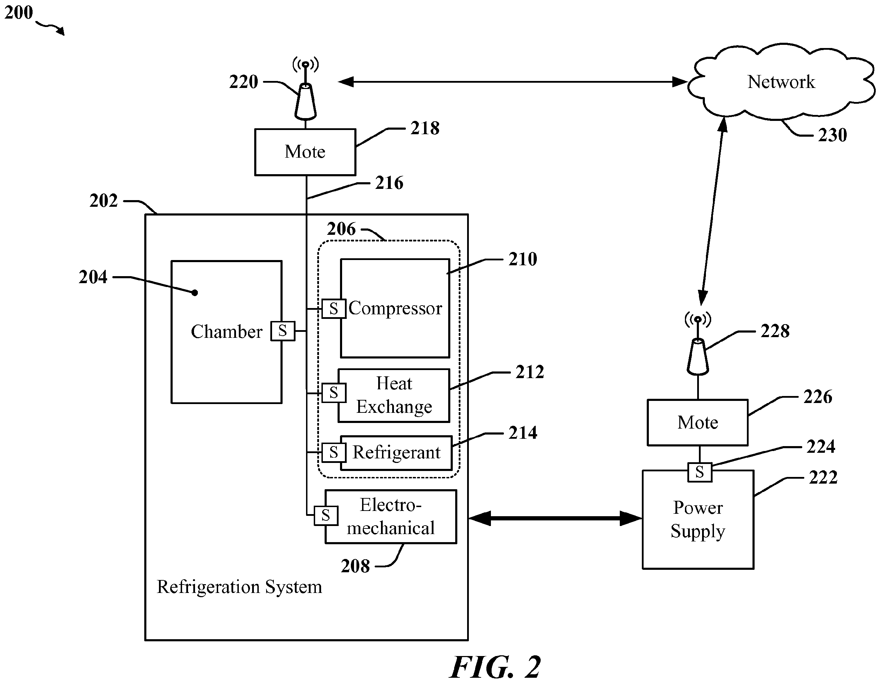

FIG. 2 is a block diagram 200 illustrating a simplified example in which a monitored asset includes a refrigeration system 202. For the purposes of this description, a refrigeration system 202 may comprise one or more of a freezer, refrigerator, storage space or room in which the temperature is controlled in order to maintain contents of a storage space or chamber 204 within a desired or required temperature range. In one example, the refrigeration system 202 may be fitted with sensors (depicted here for convenience as a sensor bus 216) that communicate with a Mote 218 configured to measure and/or monitor environmental conditions, operating conditions, thermodynamic cycles, power supplies, and other systems, characteristics and attributes associated with the refrigeration system 202, based on data sampled from or otherwise provided by the sensors 216. The combination of a Mote 218 and one or more sensors 216 monitored or controlled by the Mote 218 may also be referred to as a smart sensor. In some instances, the sensors 216 include smart sensors that include internal circuits and modules that enable the sensors to communicate with a network 230 directly or through an intermediary device 218 (or aggregator 106).

The sensors 216 may include devices that monitor equipment location, or measure electrical current, voltage, door position, temperature, pressure, mechanical strain, and/or vibrations within or surrounding the refrigeration system 202. The refrigeration system 202 may comprise more than one chamber 204 or other storage space that is maintained at a desired temperature by a refrigeration system 206. In one example, the refrigeration system 206 may include a compressor 210, a heat exchange system 212, a refrigerant circulation 214 and other electro-mechanical components 208.

In some embodiments, a second Mote 226 (or smart sensor) may be provided to monitor power consumption of one or more refrigeration systems or assets 202 using sensors 224 or other instruments. The second Mote 226 may monitor current and/or voltage sensors provided in a distribution panel or in a power supply 222. The second Mote 226 may monitor current and/or voltage sensors associated with powered components of the refrigeration system 202 including, for example, the compressor 210, pumps, valves and other rotating machinery or electromechanical devices 208.

In some instances, the Motes 218, 226 may be implemented using a smart module that has a processing circuit, storage and one or more transceivers operable to connect the Motes 218, 226 to the network 230 continuously, continually, opportunistically or when a network connection is available. One or more of the Motes 218, 226 may operate as data logger that stores various information received or generated by the Motes 218, 226. In some instances, the Motes 218, 226 may be adapted to perform certain data processing tasks on sensor data. In some instances, the Motes 218, 226 may be adapted to participate in and/or remotely manage a repair process.

In some examples, equipment location, analytical measurements and other information may be obtained from other sources, including descriptive, qualitative or quantitative data entered manually at or near the refrigeration system 202, or entered through a networked console, terminal, mobile computing device and communicated through the network 230. In one example, information representing equipment location and/or other manual measurements taken during the service or maintenance of the system may be provided through the mobile computing device 108 illustrated in FIG. 1. Power-related measurements may be directly or indirectly obtained from sensors 216 and/or 224 and energy consumption may be accurately calculated by measuring amperage and voltage periodically or continuously. In some instances, energy consumption may be estimated or calculated from secondary measurements, such as temperature variations, thermodynamic cycle frequency, total current consumption by a plurality of assets, etc. For example, energy consumption may be determined by correlating temperature or measurements related to a thermodynamic cycle with current flow in an electrical main.

In some instances, a Mote 218, 226 may survey a plurality of sensors 216, 224 or otherwise receive measurements from the sensors 216, 224 on a periodic basis. The Motes 218, 226 may be configured to process the measurements to generate raw statistical data and perform certain filtering or statistical analyses, such as identifying trends, transitions from normal to abnormal operation based on crossings of threshold values, etc. The Motes 218, 226 may be configured to store and maintain a history of measurements, trend information and other metadata. The Motes 218, 226 may be configured to use a wired or wireless network interface 220, 228 to transmit stored information, raw measurements, alarms and status information and may signal occurrences of exceptions to normal operation to a centralized or distributed monitoring system and/or a centralized or distributed controlling system. The network interfaces 220, 228 may support communications with a network environment 230 that may comprise local networks, ad hoc networks, proprietary wide area networks and/or public networks including the Internet.

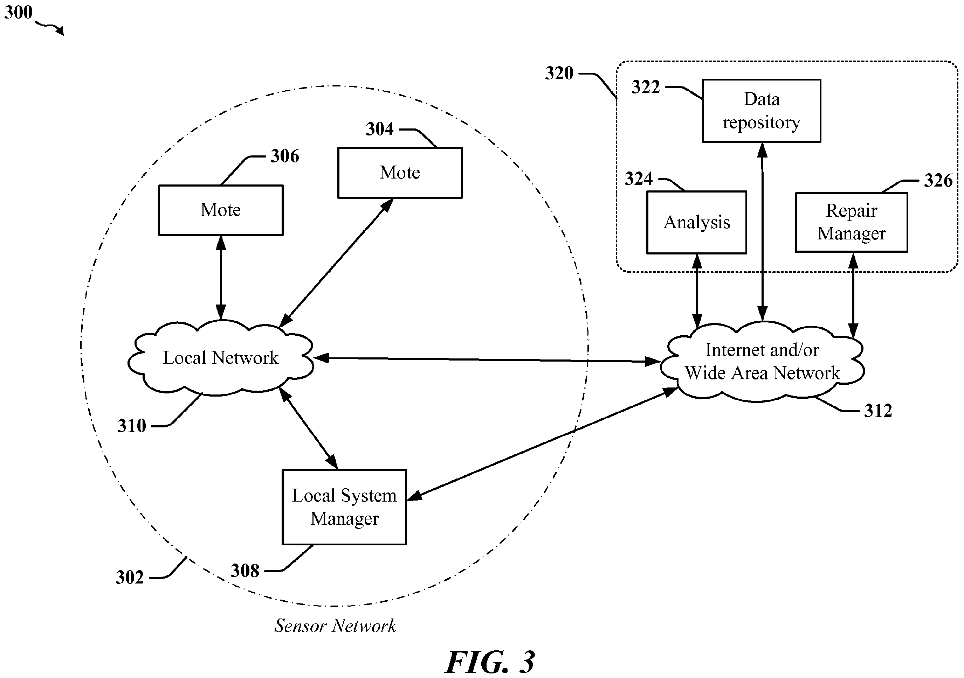

FIG. 3 is a high-level block schematic diagram 300 illustrating an example of a system configured to provide centralized or distributed control and/or monitoring of assets. Motes 304, 306 may be deployed to communicate with, and/or control sensors that monitor certain aspects of a plurality of corresponding refrigeration systems. On a large campus, a sensor network 302 may be configured to more efficiently collect and distribute sensor data sampled by Motes 304, 306 from sensors, and/or from other sources associated with refrigeration assets on the campus. The sensor network 302 may conform to a hierarchical architecture. In one example, a sensor network 302 may have one or more local system managers 308 that are deployed to collect and/or aggregate sensor data and other information provided by the Motes 304, 306. A local system manager 308 may manage and/or comprise a network of controllers and/or device managers. The Motes 304, 306 and the local system manager 308 may communicate through a local network 310, which may comprise a wired or wireless network.

The sensor network 302 may be coupled to a processing system 320 through a network 312 that may comprise a proprietary wide area network and/or a public wide area network such as the Internet. The processing system 320 may be centralized or distributed over a plurality of networked computing systems. The processing system 320 may provide a plurality of functional elements and devices, including a data repository 322, which may include a database system, an analysis system 324 that may be configured to process and analyze measurements, statistical data and trends, metadata and other information received from the sensor network 302. The analysis system 324 may employ historical data, profiles, design goals and other information maintained by the data repository 322 to review, process and otherwise analyze information received from the sensor network 302. The processing system 320 may include a repair management system that manages a repair process and service providers involved in the repair process using information received or retrieved from the sensor network 302, the analysis function 324 and/or the data repository 322.

In certain embodiments, Motes 304, 306 and local system managers 308 of the sensor network 302 may communicate using connectionless communications systems. For example, one or more sensors may use a messaging service such as a Short Message System (SMS) cellular or a Multimedia Messaging Service (MMS). Other communications methods may be employed, including routable networks. In one example, communication within the sensor network 302 and between the sensor network 302 and public or private wide area networks may be based on protocols that establish a session used to exchange commands and data. In one example, communications may be facilitated through the use of protocols that establish a contiguous packet-based data connection utilizing a single routable protocol or other session comprised of non-contiguous data connections used to exchange commands and data.

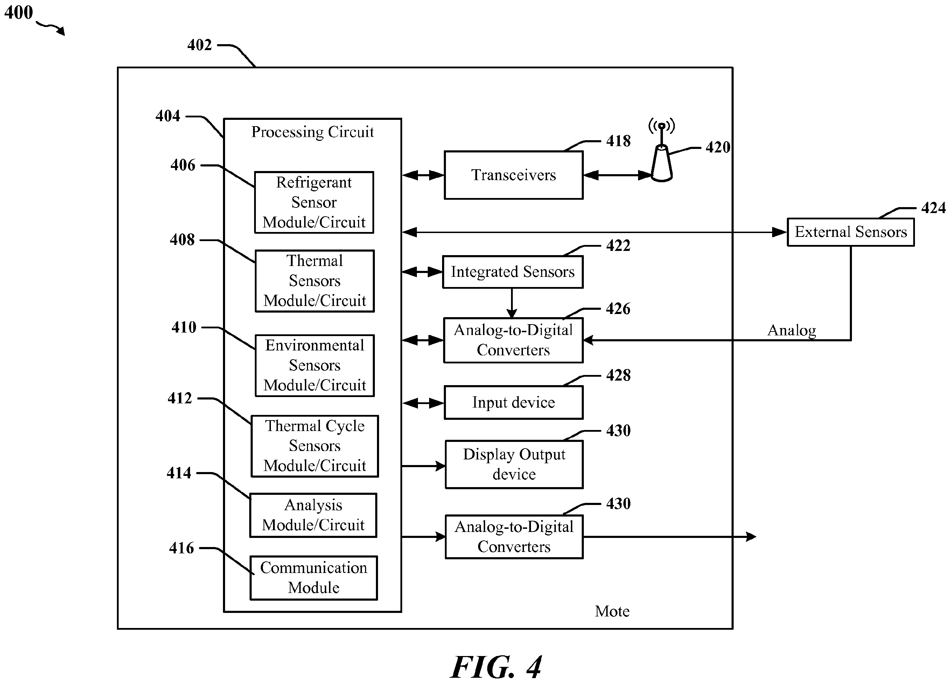

FIG. 4 is a block diagram 400 illustrating an example of an architecture for a Mote 402. With continued reference to FIGs. 1-3, the Mote 402 may be configured to connect to a network 230 by any available means. In one example, the Mote 402 includes a processing circuit 404 that may comprise one or more of a microprocessor, a microcontroller, a digital signal processor (DSP), sequencing logic, a state machine, etc. The Mote 402 and/or processing circuit may also include a variety of commonly used devices and components such as non-transitory storage, light emitting diode (LED) lamps or indicators, buttons or switches and/or an audible alarm indicator. The Mote 402 may include a communications transceiver 418 that includes radio frequency, optical or infrared transmitters and/or receivers. The Mote 402 may communicate with one or more sensors 422, 424, including sensors 422 that are incorporated in or integrated with the Mote 402 and/or external sensors 424 that may be coupled to the Mote 402 using wired physical connectors and/or wireless communications. The Mote 402 may additionally include a global positioning system receiver (not shown), a display controller 430, and user input controllers or drivers 428 that may interface with devices such as a keypad, touchscreen or the like.

The processing circuit 404 may include one or more analog-to-digital (A/D) converters 426 configured to receive analog inputs from one or more of the sensors 422 and/or 424 for example, and one or more digital-to-analog (D/A) converters 430. The processing circuit 404 may include one or more sensors 422 and/or sensor control circuits. For example, certain sensors may be provided in an integrated circuit device, on a chip carrier or circuit board that carries the processing circuit 404. The may be configurable to connect to one or more external sensor devices 424 The sensors 422, 424 may include transducers that can be used to sense or measure door position, pressure, acceleration, temperature, humidity, magnetic field, light, load, inclination, radio frequency identification (RFID) signals and or RFID return signals, whether related to a passive or active RFID tag. The processing circuit 404 may include a battery or energy scavenging device and a wired, wireless, infrared, or magnetically coupled interface 418 that is coupled to an antenna 420 used for communications.

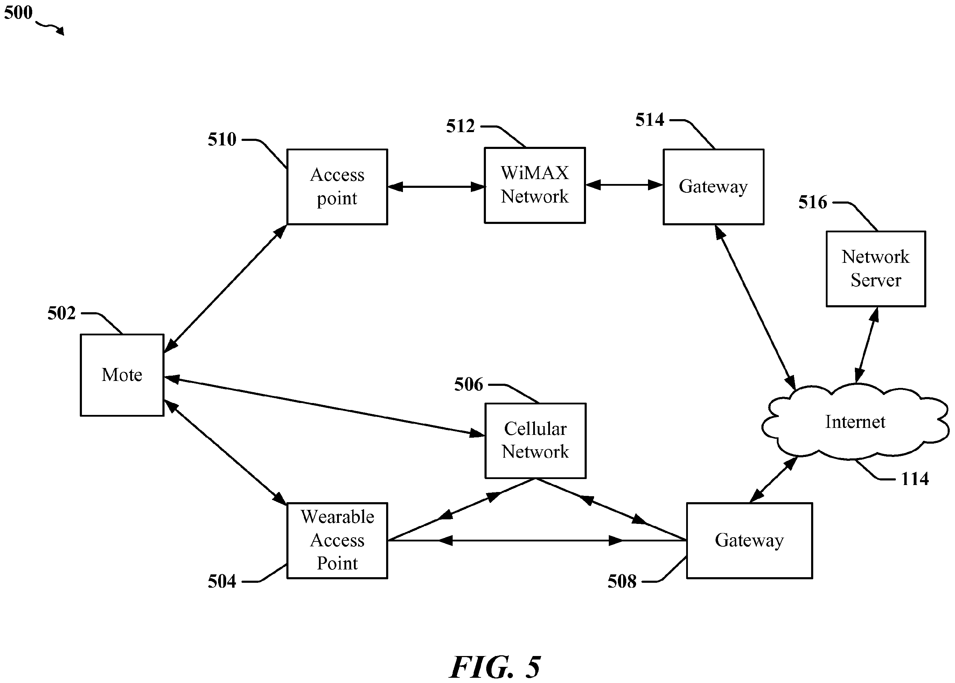

With reference to FIG. 5, a Mote 502 may exchange data with networked entities 516 using one or more networks that may be accessible through gateways 508, 514. The process of information gathering or data harvesting from one or more smart sensors 502 may be referred to herein as "data backhaul." Data may be harvested by means of a wired or continuous wireless network (WLAN) connection such as GPRS or other cellular network 506, and/or a WiMAX network 512. The Mote 502 may include one or more radio frequency (RF) transceivers operable to connect through a wireless access point 510 and/or through a purpose-built data collection agent such as a wearable access point 504 in a conventional or ad hoc network.

Certain embodiments of the invention employ systems and methods that may select assets for repair and that may evaluate the subsequent repair process and the results of repairs. In one example, repairs may be evaluated with respect to changes in status, reliability or energy consumption. An analysis of performance data and metadata may be used to select assets in need of maintenance and/or repair. In some instances, the analysis of performance data may be used to suggest or select a repair process to address identified performance issues and other conditions. Information collected during the repair process may be captured and/or aggregated to assist in later analyses. Such information may be used to devise new repair strategies, policies and/or standard operating procedures.

In certain embodiments, a user may provide contextual information such as performance characteristics, design, type, make, model, manufacturer, configuration, repair history, configuration settings, environmental conditions, and other in-service information (which may be collectively referred to as metadata) to facilitate a better understanding of the many factors and variables that could affect performance of refrigeration systems and the effectiveness and long-term persistence of repairs and repair methodologies.

Certain embodiments may employ asset tagging features and methods to correlate information obtained from sensors and metadata with performance analysis and benchmarking information and/or information identifying whether repairs result in improved or achievement of expected levels of performance. Tags may be added, deleted or changed to characterize the state-of-health and status of repairs. In one example, a user and/or the system may increment or decrement the status or state of a repair to indicate a desired or deemed status of the asset so as to control the next response or action of a service provider. In this manner, the system can keep the service provider engaged and accountable until the repair is determined to have been effective and/or persistent over time, such that the refrigeration assets performs in accordance with desired or targeted performance levels and/or for a predetermined period of time after the repair.

To facilitate efficient repair and maintenance practices, the repair process may be managed and controlled in stages. Stages and gates may be defined to control progress between stages. For example, certain gates may control whether one or more further actions are allowed or not allowed depending on successful completion of previous states, events or outcomes.

In certain embodiments, systems and methods are provided that report changes or improvements, or lack thereof, in measured or observed performance before, during or after service, maintenance or repairs. Computing devices may be configured to determine if applied maintenance results in improved or expected levels of performance. Computing devices may be configured to determine whether improvements following repair are persistent, such that improved or desired performance continues at various points and times after time of service.

In certain embodiments, systems can be packaged for remote deployment by a field service technician for example. Sensor generated information and metadata may be processed at deployed systems in real-time and the results may be stored locally and downloaded for evaluation at a later time, or transmitted periodically through a network for evaluation at a central location. In this manner, results gathered and processed at remotely deployed devices may be aggregated, analyzed and/or reviewed centrally using more powerful analytical tools and drawing on centralized human and machine expertise as required. In some instances, information aggregated from disparate sources and/or multiple operators (federated data) may be used by the analytical tools.

In certain embodiments, information and metadata may be acquired indirectly and included in processing and decision-making. For example, technicians, operators and other persons performing various operations, including examination, maintenance and/or repair operations related to a refrigeration system may obtain information relevant to the operations and/or status of the refrigeration system, and such persons may enter such information for evaluation. In this manner, results and other information gathered and processed at remotely deployed devices may be aggregated, analyzed and/or reviewed centrally regardless of whether such information is obtained automatically from sensors and other equipment, or by human intervention or observation. Data that is entered manually may include equipment location and historical repair information or qualitative or quantitative data related to configuration, environmental or operating conditions such as room temperature voltage levels measured at one or more points in an electrical circuit, repair information such as observed condition of filter media, air-flow restrictions, repair type codes and cost of repairs for one or more codes. According to certain aspects described herein, raw data can be imported from another system and included in analysis.

Certain aspects of the present invention relate to systems, apparatus and methods for identifying and/or selecting refrigeration assets in need of repair and/or managing a repair process for the selected or identified refrigeration assets. Refrigeration assets, performance levels of the refrigeration assets, defects, imperfections and repairs initiated for the refrigeration assets may be classified in accordance with certain aspects disclosed herein. In one example, refrigeration assets may be classified according to configuration, *in situ* environment, reliability, performance, make, model, and manufacturer. The repair process may be optimized and the effectiveness and persistence of repairs over time may be determined in accordance with certain aspects disclosed herein. In one example, the effectiveness of repairs may be classified in relation to a service provider, which may include a commercial enterprise, internal service organization and/or an individual selected to perform repairs.

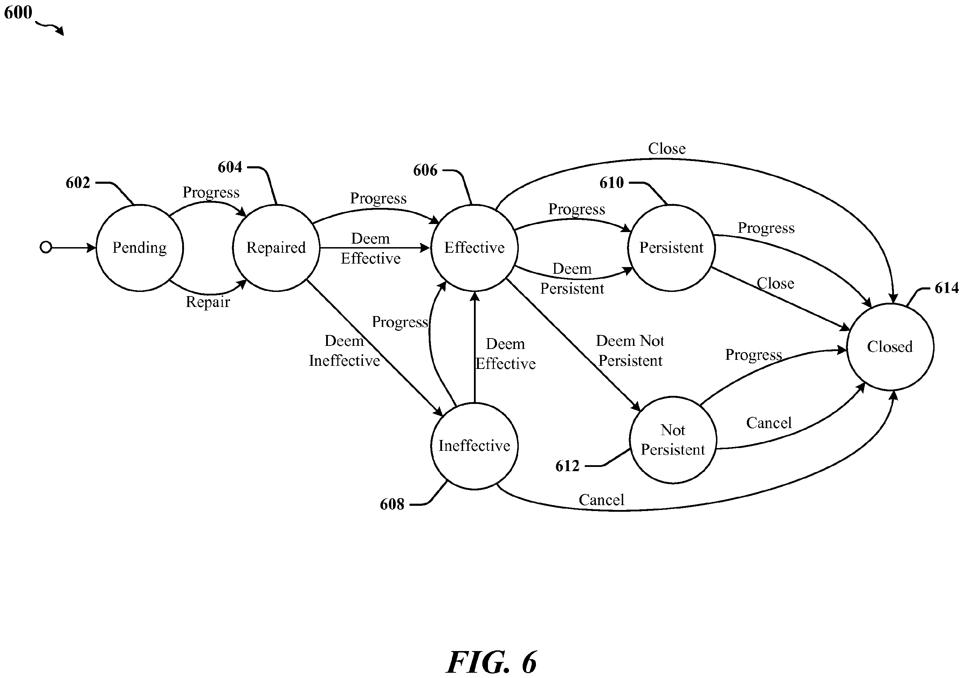

FIG. 6 is a partial state diagram 600 illustrating certain aspects disclosed herein. A field service technician may be provided with instructions identifying or suggesting services and repairs that may be performed. Notifications may be generated or received indicating whether the repairs prove to be effective and persistent over time. In one example, notifications may be received from the sensor network 302 and/or from service providers responsible for repairs. In an initial state 602, repairs are considered to be in a pending state. While in the pending state, a service technician may be dispatched. The service technician may be provided with information identifying a refrigeration system 202 to be repaired, one or more symptoms and a repair protocol explicitly identifying or suggesting repairs to be made during a service call. The service technician may execute the repair protocol or, in some instances, may replace a failing refrigeration system 202, and the process moves to a repaired state 604. In the repaired state 604, the target refrigeration system 202 may be tested and/or monitored to determine if the repair was effective. In one example, testing and monitoring may include an analysis of sensor data provided by one or more Motes 218, 226.

If the repair is deemed ineffective, then at state 608, further repair and/or monitoring may be conducted to determine if the effective state 606 can be achieved by means of additional repairs or reconfiguration. If the ineffective state 608 cannot be corrected, then the repair process may be cancelled and the repair activity enters a closed state 614. If the repair has been deemed or determined to be effective, then in the Effective state 606, the operation and performance of the refrigeration system may be monitored for one or more periods of time to determine if the repairs are persistent over time. In one example, monitoring may include an analysis of sensor data provided by one or more Motes 218, 226. The one or more periods of time may be contiguous periods of time, or may be spaced over a more prolonged monitoring period. In some instances, no further monitoring is needed and the repair process may enter a closed state 614 from the effective state 606. The period of time during which repair monitoring is performed at the Effective state 606 may be identified in a repair protocol and, when the effects of the repair persist, the process may move to a Persistent state 610 from which the process may be manually or automatically transitioned to a closed state 614. If, however, the repairs are determined to be non-persistent, the process may move to a "Not Persistent" state 612 from which the process may be manually or automatically transitioned to a closed state 614.

In certain embodiments, system-generated reports can provide documentation that enable utility companies and municipalities and/or state entities to provide energy rebates and incentives. The reports may determine an amount of incentive or rebate due by calculating deemed energy savings or net energy savings by adding or subtracting all energy gains and losses over a defined time period for each asset, then all monitored assets in total, thence applying a rate or factor representing the amount of incentive or rebate due for each unit of energy saved or lost over a prescribed period.

In certain embodiments, a service provider may issue an invoice for a repair, which may include a code issued by the system to confirm that a repair activity meets predefined thresholds and standards for post-repair performance and effectiveness. The code may be interpreted by a customer of the service provider responsible for repairs as confirmation that the performance and/or deemed effectiveness or deemed persistence standards have been met by the repair or that maintenance has achieved desired levels of performance optimization.

### Data Flow In A Repair Process

Certain embodiments of the invention for measuring the state-of-health of a refrigeration asset employ or are based on certain systems and methods for monitoring, inferring state of health, and optimizing efficiency of refrigeration systems as described in the commonly owned U.S. Patent No. 8,725,455 and its progeny (including U.S. Patent Application No. 14/275,771).

According to one or more aspects disclosed herein, refrigeration systems may be monitored using wired or wireless sensors (see the Mote 402 of FIG. 4, for example), which transmit data to a processing system 320 (see FIG. 3) for analysis and benchmarking related to performance. Performance data for a target refrigeration system may be processed, analyzed, indexed and/or plotted in reference to time, benchmarks and/or predetermined or predefined norms, in order to determine relative performance of the target refrigeration system in relation to one or more peer systems. The peer systems may be defined based on the classification of the target refrigeration system based on characteristics and attributes such as reliability, configuration, *in situ* environment, performance, make, model, manufacturer, application and/or an operational history of the target refrigeration system. The analysis of performance data may employ one or more mathematical or pattern recognition functions, such as a sine wave or a statistical model.

According to certain aspects, contextual information may be obtained from a user or by querying a database or other repository of information. In one example, the user may provide access to contextual information such as such as design, make, model, configuration, repair history, configuration settings, environmental conditions, and other in-service information ("Meta Data") that may facilitate an understanding of the various factors and variables that may affect, measure or qualify performance of a refrigeration system and/or the effectiveness and persistence of a repair process and corresponding repairs.

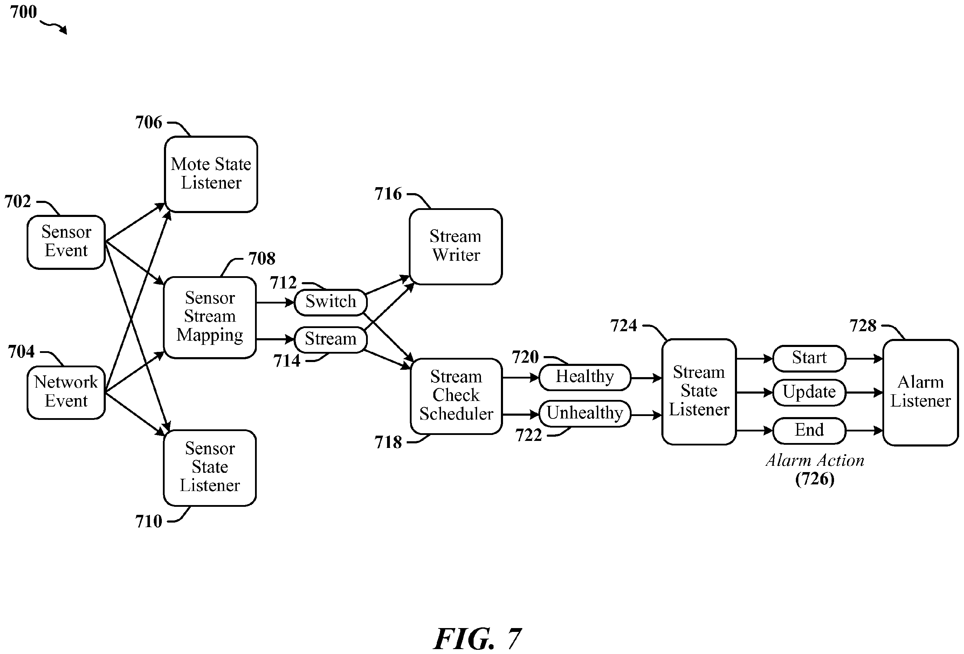

FIG. 7 is a data flow diagram 700 that demonstrates one example of sensor data acquisition, processing, and analysis. Various systems and circuits may cooperate in the data flow. The data flow may be initiated by a sensor event 702 that indicates that sensor data is available or a network event 704 that relates to network quality. The sensor event 702 may be generated when one or more Motes 102, 104 or aggregator 106 (see FIG. 1) has sensor data for processing. The one or more Motes 102, 104 or aggregator 106 may generate the event in a store-and-forward mode of operation, and/or after performing some initial analysis of the sensor data. The network event 704 may relate to network quality metrics, and may indicate a packet error rate, signal strength, signal-to-noise ratio (SNR), signal-to-interference-plus-noise ratio (SINR), or other metric that may indicate that the network connection is unreliable or trending towards unreliability. The network event 704 may require attention to avoid masking issues related to a monitored asset that cannot be timely communicated due to degradation of network connection quality.

A Mote state listener 706 may be configured to receive and process events 702, 704 and to update the state of an affected Mote 102, 104. A sensor state listener 710 may be provided to receive and process events 702, 704 for sensor related issues, and to update the state of affected sensors. A sensor stream mapping module and/or circuit 708 may receive and process the events 702, 704, and may transform sensor data to obtain a stream meta-object for further processing and analysis. The sensor stream mapper 708 may produce outputs in different formats 712, 714 that may be used to initiate and/or update a repair process. A journaling system (Stream Writer) 716 may be configured to store data in one or more formats 712, 714 for later replay.

The outputs 712, 714 of the sensor stream mapper 708 may be provided to a scheduler 718 that updates a scheduling system used for managing diagnostics on sensor data. The scheduler 718 may process sensor data to determine whether a change in status of an asset indicates that a repair should be initiated, continued, and/or terminated. In one example, the scheduler 718 may generate events or other indications 720, 722 related to an asset that may be categorized as healthy state events 720 or unhealthy state events 722. A listener module 724 may monitor such events 720, 722 in order to generate one or more alarm actions 726, including Start Alarm, End Alarm, and/or Update Alarm state. An alarm listener 728 may be used to capture and report alarm state to a user of the system.

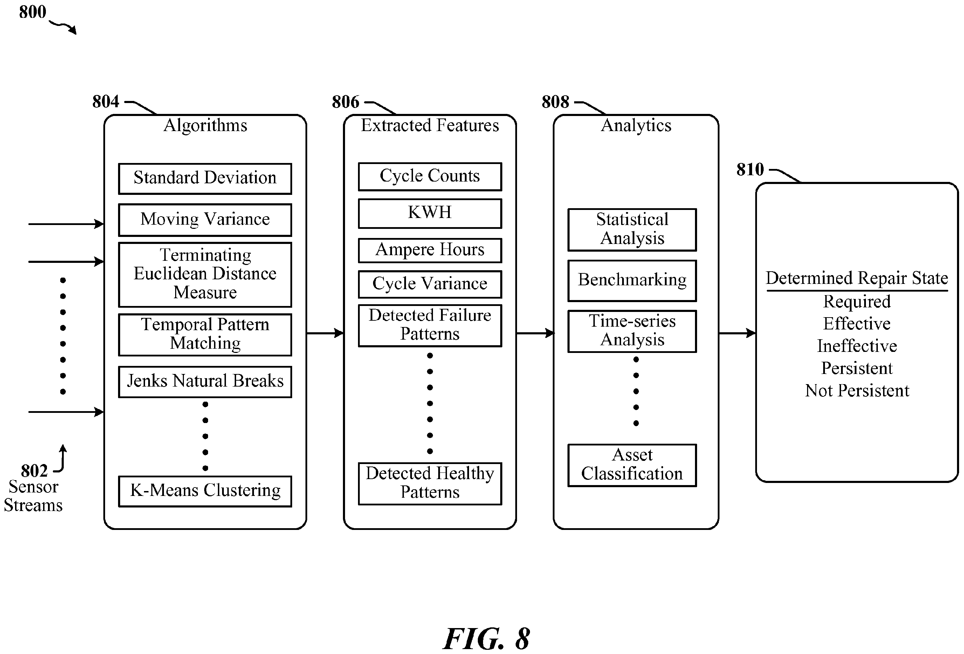

FIG. 8 is a data flow diagram 800 that illustrates certain aspects of sensor data processing and analysis using sensor streams 802. A sensor stream 802 may comprise a time series of sensor data streamed from a sensor or replayed from storage. The sensor streams 802 may be derived from sensor data provided by one or more Motes 102, 104 and may be processed using one or more algorithms 804. The sensor data algorithms may include simple measures such as maximum and minimum alarm points, or more robust methods such as a standard deviation algorithm used to observe uniformity within windows of a sensor stream 802. The algorithms may include a moving variance algorithm used to detect state changes in various elements of a system, including state changes in a compressor, for example. The algorithms may include a temporal pattern matcher algorithm configured to compare windows of sensor data for similarity scoring using one or more distance functions. The algorithms may include a terminating Euclidean distance measure algorithm or other simple distance function for pattern matching. The algorithms may include a Jenks natural breaks algorithm, a K-Means clustering algorithm or another clustering algorithm that provides a mechanism for clustering sensor data to separate states and/or to find aggregate values.

Certain features 806 may be extracted from processing the sensor data. The features 806 may include cycle counts indicating the number of cycles a compressor has, based on amperage/energy sensor or other data. The features 806 may include energy usage expressed as kilowatt-hours (kWh) or the like, and determined as the area under a power curve for a window of sensor data. Other values may be derived from energy usage including ampere-hours, for example. Ampere hours may be calculated using the formula Ampere Hours = kWh / (1000 ^{∗} volts). The features 806 may include cycle variance, which may correspond to the variance in duration of cycles such as thermodynamic cycles. Cycle variance may be used to indicate instability in a component or element of an asset when other factors remain stable. The features 806 may include detected failure patterns, which may correspond to a Pattern ID that can be matched in a pattern matching process to identify a known issue associated with a pattern exhibited in the sensor data. The features 806 may include detected healthy patterns, which may correspond to a Pattern ID that can be matched in a pattern matching process to identify expected behavior associated with a pattern exhibited in the sensor data.

Certain analytics methods 808 may be applied to discover meaningful patterns and behaviors from the sensor data. A statistical analysis may be used to examine features as a sample from one or more like sensors to find population norms. Benchmarking may be employed to compare the features and/or characteristics of multiple sensors to determine the distribution of values within a population, and to use the corresponding percentile to score the feature of that asset. A time-series analysis may be applied to identify features for a single sensor over time, and/or to determine trends or changes, which may indicate the onset of failure. Asset classification may be used to classify or tag assets based on computed values, changes over time, etc. Asset classification may consider all data to determine if an asset should be tagged for repair, for example. Asset tags can be added or removed based on trends.

Other data may be considered in addition to the sensor data. In one example, a fusion of sensor data and disparate data elements may be employed to learn new things. For example, one or more sensors may be employed to monitor plug load energy consumption in a defined area such as in a room. Plug load energy is consequently an object that can be benchmarked in a manner similar to other objects such as compressors used in a refrigeration system. Such sensor data may be fused with other data to detect human activity and energy intensity in the area. In one example, the placement of additional equipment in the room may indicate a new use pattern for the area, or more or less water or lighting being used than before or in comparison to other objects. These new data from external sources may be mined to derive a better understanding of energy utilization relative to other monitored objects deemed to be similar or comparable.

One or more states 810 may be defined for a monitored asset. The states 810 may be communicated using a grading system that can be expressed graphically and/or textually. For example, a color-coding scheme may be applied to a graphical display indicating current performance metrics, such as power consumption, cycle variance, temperature curves, and the like. An asset may be graded using a configurable and/or familiar color-coding system (Green, Yellow and Red), such that the performance of each asset can be determined in comparison to known achievable levels of performance and energy efficiency to its peers (same make/model) in the population. Grading scores may be derived from sensor data obtained from sensors associated with assets deployed in a variety of settings, locations, and configurations.

In one example, assets performing within expectations may be color-coded as Green assets, while underperforming may be coded as Yellow or Red assets. A higher grade (Green) may indicate that the asset is deemed to be operating efficiently, and/or may be consuming less energy than the average of its peers. A next grade (Yellow) may indicate that the scored asset is exhibiting signs of stress and is consuming more energy than the average of its peers. Although there is some potential for energy savings, payback for repairs on these assets may not be as attractive, although repairs and mitigation measures on these assets may achieve higher levels of reliability as an operational policy decision. A low grade (Red) indicates serious maintenance, configuration, environmental, and/or other problems. Assets scored "Red" may be immediate candidates for repair as they are exhibiting signs of stress consistent with imminent mechanical failure, in addition to wasting significant amounts of energy.

Scoring may be accomplished when enough data for a specific asset make/model group is available. A color-code score may be assigned to each asset based on its current performance, before repairs, and/or relative to its peers in a database of the same or similar make/model assets. Asset grades may be assigned based on statistical analysis that may identify an Optimal Level of Performance (OLP) based on a predefined standard deviation. In one example, the top 10% statistically and best performing assets for the make/model may be deemed to have achieved the OLP, and no repairs need be performed on these assets and in many cases maintenance can be deferred for this assets. An asset that is assigned a grade of Yellow may exhibit a calculated annual energy consumption that is 76% to 89% of the OLP. These assets are candidates for repair. An asset may be assigned a grade of Red if the projected annualized kWh is less than 75% of the OLP. Such assets may be identified as candidates for immediate repair.

In one example, a proxy profile may be used to temporarily assign a make/model profile to an asset. An administrator may select a proxy, which represents a similar asset in terms of size, age and construction. Once it has been determined that the database contains a sufficiently large sample for the target make/model, then the proxy or the make/model group may be removed and the system may score the assets using the automated scoring methodology described above using empirical data.

In another example, estimated asset scoring may be employed when there is insufficient make/model data in the database to score an asset. An estimated grade may be assigned based on an analysis of compressor cycling or other known measure of mechanical stress that is highly correlated with energy consumption. An asset may be assigned a grade of Green if the compressor on-time is below 74%. No repairs need be performed on these assets. An asset may be assigned a grade of Yellow if the compressor on-time is 75% - 84%. These assets are candidates for repair. An asset may be assigned a grade of Red if the compressor on-time is above 85%. These assets may be candidates for immediate repair.

A benchmark scoring process may be run automatically once per month and prior history is retained by the system such that asset grade changes, attributable to changes in asset performance, can be tracked over time for each individual asset.

### Examples Of Systems And Methods For Managing Effectiveness Of Repairs

FIG. 9 is a conceptual diagram 900 illustrating a simplified example of a hardware implementation for an apparatus employing a processing circuit 902 that may be configured to perform one or more functions disclosed herein. In accordance with various aspects of the disclosure, an element, or any portion of an element, or any combination of elements as disclosed herein. The processing circuit 902 may include one or more processors 904 that are controlled by some combination of hardware and software modules. Examples of processors 904 include microprocessors, microcontrollers, digital signal processors (DSPs), field programmable gate arrays (FPGAs), programmable logic devices (PLDs), state machines, sequencers, gated logic, discrete hardware circuits, and other suitable hardware configured to perform the various functionality described throughout this disclosure. The one or more processors 904 may include specialized processors that perform specific functions, and that may be configured, augmented or controlled by one of the software modules 916. For example, the processing circuit may be configured as communications processors and other processors that are adapted to handle encoding and decoding of data for transmission on one or more wired or wireless networks. The one or more processors 904 may be configured through a combination of software modules 916 loaded during initialization, and may be further configured by loading or unloading one or more software modules 916 during operation.

In the illustrated example, the processing circuit 902 may be implemented with a bus architecture, represented generally by the bus 910. The bus 910 may include any number of interconnecting buses and bridges depending on the specific application of the processing circuit 902 and the overall design constraints. The bus 910 links together various circuits including the one or more processors 904, and storage 906. Storage 906 may include memory devices and mass storage devices, and may be referred to herein as computer-readable media. The bus 910 may also link various other circuits such as timing sources, timers, peripherals, voltage regulators, and power management circuits. A bus interface 908 may provide an interface between the bus 910 and one or more transceivers or line interface circuits 912. A transceiver 912 may include encoders, decoders, and radio frequency transmitters and receivers that are used in communicating with various other apparatus over a wired or wireless network or through an opportunistic wireless connection. Depending upon the nature of the apparatus, a user interface 918 (e.g., keypad, display, speaker, microphone, joystick) may also be provided, and may be communicatively coupled to the bus 910 directly or through a bus interface 908.

A processor 904 may be responsible for managing the bus 910 and for general processing that may include the execution of software stored in a computer-readable medium that may include the storage 906. In this respect, the processing circuit 902, including the processor 904, may be used to implement any of the methods, functions and techniques disclosed herein. The storage 906 may be used for storing data that is manipulated by the processor 904 when executing software, and the software may be configured to implement any one of the methods disclosed herein.

One or more processors 904 in the processing circuit 902 may execute software. Software shall be construed broadly to mean instructions, instruction sets, code, code segments, program code, programs, subprograms, software modules, applications, software applications, software packages, routines, subroutines, objects, executables, threads of execution, procedures, functions, algorithms, etc., whether referred to as software, firmware, middleware, microcode, hardware description language, or otherwise. The software may reside in computer-readable form in the storage 906 or in an external computer readable medium. The computer-readable medium and/or storage 906 may be a non-transitory computer-readable medium. A non-transitory computer-readable medium includes, by way of example, a magnetic storage device (e.g., hard disk, floppy disk, magnetic strip), an optical disk (e.g., a compact disc (CD) or a digital versatile disc (DVD)), a smart card, a flash memory device (e.g., a "flash drive," a card, a stick, or a key drive), a random access memory (RAM), a read only memory (ROM), a programmable ROM (PROM), an erasable PROM (EPROM), an electrically erasable PROM (EEPROM), a register, a removable disk, and any other suitable medium for storing software and/or instructions that may be accessed and read by a computer. The computer-readable medium and/or storage 906 may also include, by way of example, a carrier wave, a transmission line, and any other suitable medium for transmitting software and/or instructions that may be accessed and read by a computer. The computer-readable medium and/or the storage 906 may reside in the processing circuit 902, in the processor 904, external to the processing circuit 902, or be distributed across multiple entities including the processing circuit 902. The computer-readable medium and/or storage 906 may be embodied in a computer program product. By way of example, a computer program product may include a computer-readable medium in packaging materials. Those skilled in the art will recognize how best to implement the described functionality presented throughout this disclosure depending on the particular application and the overall design constraints imposed on the overall system.

The storage 906 may maintain software maintained and/or organized in loadable code segments, modules, applications, programs, etc., which may be referred to herein as software modules 916. Each of the software modules 916 may include instructions and data that, when installed or loaded on the processing circuit 902 and executed by the one or more processors 904, contribute to a run-time image 914 that controls the operation of the one or more processors 904. When executed, certain instructions may cause the processing circuit 902 to perform functions in accordance with certain methods, algorithms and processes described herein.

Some of the software modules 916 may be loaded during initialization of the processing circuit 902, and these software modules 916 may configure the processing circuit 902 to enable performance of the various functions disclosed herein. For example, some software modules 916 may configure internal devices and/or logic circuits 922 of the processor 904, and may manage access to external devices such as the transceivers or wired interfaces 912, the bus interface 908, the user interface 918, timers, mathematical coprocessors, and so on. The software modules 916 may include a control program and/or an operating system that interacts with interrupt handlers and device drivers, and that controls access to various resources provided by the processing circuit 902. The resources may include memory, processing time, access to the transceivers 912, the user interface 918, and so on.

One or more processors 904 of the processing circuit 902 may be multifunctional, whereby some of the software modules 916 are loaded and configured to perform different functions or different instances of the same function. The one or more processors 904 may additionally be adapted to manage background tasks initiated in response to inputs from the user interface 918, the transceivers 912, and device drivers, for example. To support the performance of multiple functions, the one or more processors 904 may be configured to provide a multitasking environment, whereby each of a plurality of functions is implemented as a set of tasks serviced by the one or more processors 904 as needed or desired. In one example, the multitasking environment may be implemented using a timesharing program 920 that passes control of a processor 904 between different tasks, whereby each task returns control of the one or more processors 904 to the timesharing program 920 upon completion of any outstanding operations and/or in response to an input such as an interrupt. When a task has control of the one or more processors 904, the processing circuit is effectively specialized for the purposes addressed by the function associated with the controlling task. The timesharing program 920 may include an operating system, a main loop that transfers control on a round-robin basis, a function that allocates control of the one or more processors 904 in accordance with a prioritization of the functions, and/or an interrupt driven main loop that responds to external events by providing control of the one or more processors 904 to a handling function.

FIG. 10 is a flowchart 1000 illustrating an example of a repair process that may be managed according to certain aspects disclosed herein. The repair management process begins at block 1002 when a current (or "pre-repair") baseline is obtained from measurements taken for a targeted refrigeration system, prior to the start of the repair. The current baseline and/or one or more other baselines are created for any attributes that can be measured or calculated for the refrigeration system, including in reference to its peers. In some instances, the baseline may relate to averages of measurements and calculations obtained from a group of peer refrigeration systems or refrigeration assets. In some instances, the baseline may relate to measurements and calculations obtained from a specific set of refrigeration assets classified according to performance within a particular environment or context. For example, the performance of a specific set of refrigeration assets may correspond to hot room, cold room, low airflow, and/or low voltage configurations.

At block 1004, the system determines that a repair is to be performed for a refrigeration system. The determination may be based on the evaluation of one or more baselines for one or more attributes of the refrigeration system. The baselines are used as known achievable goals to guide and/or control the repair process. A normal baseline may be identified, where the normal baseline identifies expected values for a given attribute or operating characteristic of the refrigeration system to be repaired, or for an idealized or optimally operating refrigeration system of a comparable or same type. In one example a baseline may be determined from manufacturer-provided information. In another example, the baseline may be a manufacturer-provided or user-specified baseline based on experience with comparable equipment, or an empirical baseline obtained from observed performance of the refrigeration system targeted for repair, or from observed performances of a peer group of refrigeration systems.

In some instances, recommendations of a make and/or model of refrigeration asset may be made for use in a specific context where the recommended refrigeration asset may not score well in other contexts and/or may exhibit lower performance levels when measured on average against its peers. In one example, a refrigeration asset may be recommended when high door access activity is anticipated when the recommended refrigeration asset exhibits superior recovery efficiency. In another example, a refrigeration asset may be recommended for usage in a low-voltage environment. In another example, a refrigeration asset may be recommended for usage in a room that has poor airflow. In these examples, recommendations may be made using alternative scores that are generated based on different conditions of installation or use.

At block 1006, the repair is initiated. A repair technician may begin by assessing the equipment health and assigning problem codes and one or more repair codes associated with the target refrigeration system. These problem codes and repair codes may be used to determine expected post-repair performance levels and/or performance level improvements for the target refrigeration system, which may be expressed in one or more post-repair baselines. Each of the post-repair baselines may relate or correspond to one or more measurable or calculable attributes. After the repair is physically completed, the repaired refrigeration system may be allowed to stabilize prior to capturing one or more post-repair baselines from measured attributes and performance parameters of the repaired refrigeration system.

At block 1008, the one or more post-repair baselines may be used to determine if the repair was effective. The determination may be based on one or more of the measured attributes. In some instances, measurements of all of the attributes in the one or more post-repair baselines may not be available immediately after repair, and the assessment of the effectiveness of the repair may be a partial assessment and/or provisional in nature. One or more algorithms may be applied to compare one or more post-repair baselines with corresponding pre-repair baselines and/or normal baselines to determine if the repair was effective. If the repair is deemed not effective at block 1008, then a notation to that effect may be made at block 1016 and a repair may be attempted again.

If at block 1008 the repair is determined to be at least provisionally effective, then at block 1010 a notation to that effect may be recorded in a log, journal or other information characterizing the repaired refrigeration system. A provisional determination of effectiveness may be confirmed or retracted after new measurements are obtained after the refrigeration system has fully stabilized. The expected post-repair baselines may identify the duration of the settling period of time. This decision of effectiveness may be based on repair codes and on the peer group that is being used for comparison.

In the event that an effective repair is determined, the repaired refrigeration system may be monitored for a period of time after the repair is deemed effective to determine whether the repair is persistent. In some instances, the latter determination may be used to determine if a utility incentive payment may be applicable. For example, the period of time may be selected based on a deemed measure defined by an energy provider who offers energy incentives and rebates to promote energy efficiency measures. A persistent repair may be a repair that returns the repaired refrigeration system to normal operation for a prolonged period of time. Normal operation may be defined by the system, an operator, an energy producer, or the like. The prolonged period of time may be determined when the repair is initiated at block 1006. Various criteria may be applied to define the point at which the repair may be determined to be persistent over time. In some embodiments, a counter, timer and/or other metering device may be employed to measure elapsed time from repair until the point at which the repair can be determined to be persistent. In one example, a timer may be initiated to define a time-based monitoring period during which total energy consumption must remain below a predetermined threshold. In another example, a cycle counter may be configured to define a range or total number of cycles or amount of compressor active/on-time to be achieved or maintained in order to determine persistence of repair.

The timer, counter and/or other meter may be monitored at block 1012 to determine when the repair can be deemed effective at block 1014. If the monitoring period has not expired, the performance of the repaired refrigeration system may be continually or continuously assessed during the monitoring period and post-repair baselines may be updated or augmented with measurements obtained during the monitoring period. Accordingly, additional determinations of effectiveness of the repair may be made (at block 1008) during the monitoring period. In one example, the additional determinations of effectiveness may continue until the repair is determined either ineffective at block 1016 or effective and persistent at block 1014, after expiration of the monitoring period. Problem and repair codes may be analyzed, correlated and associated with the specific make/model or design of the refrigeration system to programmatically ascribe, for future reference, recurring problems and repair codes for specific make/models or designs.

In some instances, measurements captured at a plurality of refrigeration assets by one or more smart sensors, Motes, or smart modules may be configured to communicate the measurements through a datalogger. The data logger may be implemented using circuits or modules of the smart sensors, Motes, or smart modules. The datalogger may store or otherwise maintain sensor data and other information that can be communicated through a network after the datalogger has identified or established a network connection. In certain examples, information collected from smart sensors, Motes, or smart modules may be transmitted to an analysis system through a network at a predefined rate (e.g. every 4 or 8 minutes) as a bundle of observations made a faster rate (e.g., every 30 second or every minute), and/or at the earlier of a longer-term timer (1 hour) or alarm. In some examples, the datalogger, smart sensors, Motes, or smart modules may be adapted to execute one or more data processing algorithms using the sensor data. In some examples, the datalogger, smart sensors, Motes, or smart modules may be adapted to manage certain aspects of a repair process, including enabling a remote supervisor to oversee the work of less qualified service personnel.

According to certain aspects, multiple evaluation periods may be defined in order to determine whether a repair is persistent. These evaluation periods may be contiguous and the performance of a repaired refrigeration asset may be evaluated independently during each evaluation period. In some instances, one or more evaluation periods may overlap. For example, first and second evaluation periods may both commence immediately after repair of the refrigeration asset. The second evaluation period may span a longer interval of time than the first evaluation period.

Configurable parameters may be used to determine the duration of the monitoring period used to evaluate the persistence of a repair. Persistence may be measured over time and one or more parameters may dynamically adjust the persistent threshold to account for normal mechanical degradation and/or changes in configuration or environment. In some instances, one or more additional "persistence" baselines may be established for one or more attributes. The persistence baseline may be compared with the post-repair, pre-repair and/or normal baselines to determine if the repair persisted over the specified monitoring period. If the repair persisted, the repair process may be deemed complete. If the repair is not effective or does not persist, a decision to attempt another repair of the refrigeration may be made. The decision may rest upon differences observed in the various baselines related to previous repairs, improvements or degradations in performance and any new information obtained during previous repairs to the same, similar or comparable systems. Persistence of a repair may be based on a comparison mechanical or energy performance to a set point, benchmark, rule, method or standard.

Certain calculations using the baselines derived from or established for peer groups and the post-repair baselines may enable the system to flag the repairs as either effective or persistent based on the time frame during which the calculations are performed. The peer group may establish and/or define acceptable values for various attributes to be monitored. The peer group may account for *in-situ* variables to enable the evaluations to calibrate for the actual refrigeration system that is being repaired. The in-situ variables may include operational parameters such as set point, airflow, supplied power, power quality levels, and ambient temperature. Leveraging pre-repair snapshots may enable an accurate evaluation of the effectiveness and persistence of repairs.

In some instances, a refrigeration system may be selected for repair based on an analysis of performance data and/or in comparison to Meta Data. Meta Data may include repair codes and repair costs, for example. The selection process, pre-repair, post-repair, persistence and other baselines may be used to modify repair processes and/or to devise new repair strategies, improved repair strategies, policies or standard operating procedures.

Asset tagging features and methods may be employed to facilitate management of the repair process. Asset tagging features may be used to correlate sensor measurements, Meta Data and measured, estimated or calculated performance of refrigeration systems. Asset tags may be added, deleted and/or changed in a manner that characterizes the state-of-health of a refrigeration system and status of repairs associated with the refrigeration system. In one example, asset tagging may include a status indicator that can be incremented, decremented, or otherwise modified to indicate progress, status, state of a repair and/or or changes in performance. The asset tag may be used to control a service provider's next action or response. In this manner, the service provider may remain engaged and accountable until the repair is deemed effective and/or persistent, as determined by desired or targeted levels.

To facilitate efficient repair and maintenance practices, the repair process may be managed and controlled in stages, with gates that allow or disallow further actions. The gates may be operated based on successful completion of previous states, events or outcomes. Progress may be measured based on the current stage of the repair process. In one example, payment of a service provider invoice may be conditioned on the inclusion in the Invoice of a system-issued code indicating the effectiveness or persistence of the repair

In some instances, changes or improvements in performance of a refrigeration system, or lack thereof, may be reported before, during or after service, maintenance or repairs. Effectiveness of a repair or maintenance may be automatically determined based on whether improved or expected levels of performance are measured after the repair and/or maintenance. Information identifying the status, effectiveness and/or persistence of repairs and/or maintenance may be provided on a dynamic display of system status. For example, performance of a population of refrigeration systems may be tagged with a qualitative color code, highlights or other means to identify failing, underperforming, and repaired refrigeration systems. The status of ongoing repairs may be highlighted until the repair is deemed persistent. Historical information, including status performance levels and repair codes may be provided in an alert, alarm and/or scheduled or ad-hoc report.

Various aspects disclosed herein may be implemented in a distributed computing system. In one example, a field service technician may be equipped with a portable computing system that can communicate with a local or remote application server. The portable computing system may maintain copies of information related to systems to be repaired. In one example, the portable computing system may maintain or have access to various baselines associated with an underperforming or defective refrigeration system. The portable computing system may maintain information including sensor measurements and Meta Data that can be processed in real-time. The results of such processing may be provided to a networked resource that is configured or adapted to perform detailed analysis of the information and provided profiles and baselines to be evaluated by more skilled individuals or decision support systems. The portable computing system may provide the repair technician with real-time results of the repair and feedback from network resources. The portable computing system may provide a field service technician with instructions regarding services and repairs to be performed. In some instances, the portable computing system may notify the field service technician when repairs are deemed effective and/or persistent. In some instances, the portable computing system may provide instructions or suggestions from another skilled or specially trained person or manager.

In some embodiments, information may be generated that document energy efficiency and savings. Such information may be used to determine appropriate or contracted utility energy rebates and incentives. For example, reports may be generated that determine the amount of incentive or rebate due by calculating energy savings or net energy savings by adding, and/or by subtracting all energy gains and losses over a defined time period for each asset. The calculations related to an incentive or rebate may be based on rules and methods set by an energy provider. A total energy savings or efficiency for all monitored assets may then be used to calculate rebates and incentives by applying a rate or factor representing the amount of incentive or rebate due for each unit of energy saved or lost over a prescribed period. In some instances, energy savings may be projected over a long period of time to determine the incentive payment due from a utility for the specified period of time, based on projected performance which may include adjustments to account from normal mechanical degradation and other factors likely to occur during such period.

In some instances, the status information regarding a repair or maintenance event may be used to generate and invoices. In one example, an invoice issued by a service provider may include a system-generated code that confirms the performance levels of a repaired refrigeration system, effectiveness and/or persistence of a repair. The code may be interpreted by a customer as confirmation that the repair or maintenance has achieved a desired level or result. The desired level or result may be based on the achievement and/or persistence of improved levels of health, reliability, and energy efficiency or that it may have done so for a period of time.

FIG. 11 is a flowchart illustrating a method for managing and controlling a network of refrigeration systems. At step 1102, measurements captured at a plurality of refrigeration systems are received. The measurements may include measurements of temperatures and energy consumption and compressor performance that characterize the performance of each of the plurality of refrigeration systems. The measurements may be captured at the plurality of refrigeration systems by a plurality of smart sensors configured to communicate the measurements through a network, or may be manually entered or programmatically uploaded into the system by other means. At least one of the plurality of smart sensors may be configured to communicate statistical information based on measurements of performance of a refrigeration system associated with the at least one smart sensor. At least one of the plurality of smart sensors may be configured to communicate analytical information based on a statistical analysis of measurements of performance of a refrigeration system associated with the at least one smart sensor.

At step 1102, at least one refrigeration system that is performing below an optimal level may be identified or determined. The optimal level is determined based on a comparison of the performance of a reference population of refrigeration systems identified in a history of prior measurements.

At step 1102, a repair process for the at least one refrigeration system may be initiated.

At step 1102, the at least one refrigeration system may be monitored for a predefined period of time to determine whether the at least one refrigeration system is performing at the optimal level or above for a predefined period of time after the at least one refrigeration system has been repaired.

FIG. 12 is a conceptual diagram illustrating an example of a hardware implementation for an apparatus 1200 employing a processing circuit 1202. In this example, the processing circuit 1202 may be implemented with a bus architecture, represented generally by the bus 1216. The bus 1216 may include any number of interconnecting buses and bridges depending on the specific application of the processing circuit 1202 and the overall design constraints. The bus 1216 links together various circuits including one or more processors, represented generally by the processor 1212, and computer-readable media, represented generally by the processor-readable storage medium 1214. One or more timers may be connected to the bus and/or may be directly accessible or embodied in a processor 1212. The bus 1216 may also link various other circuits such as timing sources, timers, peripherals, voltage regulators, and power management circuits. One or more transceivers 1220 may provide wired communications, or wireless communications through the operation of at least one antenna 1218. Depending upon the nature of the apparatus, a user interface may be provided to support devices such as a keypad, a display, a speaker, a microphone, a joystick, and the like.

The processor 1212 is responsible for managing the bus 1216 and general processing, including the execution of software stored on the processor-readable storage medium 1214. The software, when executed by the processor 1212, causes the processing circuit 1202 to perform the various functions described supra for any particular apparatus. The processor-readable storage medium 1214 may be used for storing data that is manipulated by the processor 1212 when executing software. The processor-readable storage medium 1214 may also be used for storing system information related to one or more remotely managed devices (e.g. profiles), and the apparatus 1200 itself.

In one configuration the processing circuit 1202 may perform one or more functions in a system configured to monitor and/or manage a population of refrigeration systems. The processing circuit 1202 may include a module or circuit 1204 configured to receive measurements captured at a plurality of refrigeration assets, a module or circuit 1206 configured to determine at least one refrigeration system that is performing below an optimal level, a module or circuit 1208 configured to initiate a repair process for the at least one refrigeration system. The module or circuit 1204 may be further configured to monitor the at least one refrigeration system for a predefined period of time to determine whether the at least one refrigeration system is performing at the optimal level or above for a predefined period of time after the at least one refrigeration system has been repaired.

It is to be understood that the specific order or hierarchy of steps in the methods disclosed is an illustration of exemplary processes. Based upon design preferences, it is understood that the specific order or hierarchy of steps in the methods may be rearranged. The accompanying method claims present elements of the various steps in a sample order, and are not meant to be limited to the specific order or hierarchy presented unless specifically recited therein.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but are to be accorded the full scope consistent with the language of the claims, wherein reference to an element in the singular is not intended to mean "one and only one" unless specifically so stated, but rather "one or more." Unless specifically stated otherwise, the term "some" refers to one or more. A phrase referring to "at least one of' a list of items refers to any combination of those items, including single members. As an example, "at least one of: a, b, or c" is intended to cover: a; b; c; a and b; a and c; b and c; and a, b and c.

The word "exemplary" as used herein to mean "serving as an example, instance, or illustration." Any implementation or aspect described herein as "exemplary" is not necessarily to be construed as preferred or advantageous over other aspects of the disclosure. Likewise, the term "aspects" does not require that all aspects of the disclosure include the discussed feature, advantage or mode of operation. The term "coupled" is used herein to refer to the direct or indirect coupling between two objects. For example, if object A physically touches object B, and object B touches object C, then objects A and C may still be considered coupled to one another-even if they do not directly physically touch each other. For instance, a first die may be coupled to a second die in a package even though the first die is never directly physically in contact with the second die.

Also, it is noted that the embodiments may be described as a process that is depicted as a flowchart, a flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed. A process may correspond to a method, a function, a procedure, a subroutine, a subprogram, etc. When a process corresponds to a function, its termination corresponds to a return of the function to the calling function or the main function.

The various features of the invention described herein can be implemented in different systems without departing from the invention. It should be noted that the foregoing aspects of the invention are merely examples and are not to be construed as limiting the invention. The description of the aspects of the present invention is intended to be illustrative, and not to limit the scope of the claims. As such, the present teachings can be readily applied to other types of apparatuses and many alternatives, modifications, and variations will be apparent to those skilled in the the art. The scope of the invention is merely defined by the appended claims.

## Claims

1. A method of controlling a network of refrigeration systems, comprising:
receiving measurements captured at a plurality of refrigeration systems, the measurements including measurements of temperatures and electrical currents that characterize performance of each of the plurality of refrigeration systems (1102);
determining at least one refrigeration system of the plurality of the refrigeration systems that is performing below an optimal level (1104) and initiating a repair process for the at least one refrigeration system (1106), **characterized by**
generating one or more post-repair baselines after the at least one refrigeration system has stabilized after having been repaired by monitoring the at least one refrigeration system for a predefined period of time, wherein the one or more post-repair baselines relate to post-repair durations of thermodynamic cycles or energy usage; and
comparing the one or more post-repair baselines with corresponding pre-repair baselines generated from measurements obtained from the at least one refrigeration system to determine whether the at least one refrigeration system is performing at the optimal level or above for a predefined period of time after the at least one refrigeration system has been repaired (1108), wherein the one or more pre-repair baselines relate to pre-repair durations of thermodynamic cycles or energy usage,
wherein the optimal level is determined based on the performance of a population of refrigeration systems identified in a history of prior measurements, and
wherein the one or more post-repair baselines and the one or more pre-repair baselines are generated from the measurements of temperatures and electrical currents that characterize the performance of the refrigeration system.

2. The method of claim 1, wherein performance below the optimal level is determined based on a comparison of the performance of the each of the plurality of refrigeration systems in comparison to performance of a reference population of refrigeration systems.

3. The method of claim 1, wherein the measurements are captured at the plurality of refrigeration systems by a plurality of smart sensors configured to communicate the measurements through a routable communications network or a datalogger.

4. The method of claim 3, wherein at least one of the plurality of smart sensors is configured to communicate statistical information based on measurements of performance or energy consumption of a refrigeration system associated with the at least one smart sensor, or wherein at least one of the plurality of smart sensors is configured to communicate analytical information based on a statistical analysis of measurements of performance of a refrigeration system associated with the at least one smart sensor.

5. The method of claim 1, further comprising analyzing the measurements captured at the plurality of refrigeration systems, wherein the at least one refrigeration system that is performing below the optimal level is determined based on the analyzing.

6. The method of claim 5, wherein analyzing the measurements captured at the plurality of refrigeration systems, includes performing a statistical analysis.

7. The method of claim 1, further comprising
analyzing the measurements captured at the plurality of refrigeration systems, wherein the at least one refrigeration system is determined to be performing at the optimal level or above for the predefined period of time based on the analyzing.

8. The method of claim 1, wherein the measurements include measurements of vibration in at least one refrigeration system.

9. The method of claim 1, wherein initiating the repair process comprises:
providing a repair procedure to a repair technician, the repair procedure identifying actions to be taken or omitted and timing of the actions to be taken or omitted.

10. An apparatus for managing repair of a refrigeration system, comprising:
a controller (402) comprising at least one processing circuit (404) that includes a processor (414) and at least one sensor controller (406, 408, 410, 412, 426) configured to connect one or more external sensor devices to the controller, the at least one processing circuit being configured to collect measurements captured by the one or more external sensor devices at a refrigeration system, the measurements including measurements of temperatures and electrical currents that characterize performance of the refrigeration system;
an analyzer comprising at least one processing circuit configured to determine a current performance level of the refrigeration system in relation to an optimal level determined based on the performance of a population of refrigeration systems identified in a history of prior measurements maintained by the controller or the analyzer; and
an interactive server configured to manage a repair process initiated when the analyzer determines that the refrigeration system is performing below the optimal level,
**characterized in that** the interactive server, the controller and analyzer cooperate to determine whether the refrigeration system operates at or above the optimal level for a predetermined period of time after completion of the repair process by comparing pre-repair baselines obtained from measurements taken for the at least one refrigeration system with one or more post-repair baselines obtained by monitoring the at least one refrigeration system for a predefined period of time after the at least one refrigeration system has stabilized after having been repaired, and
wherein the one or more post-repair baselines relate to post-repair durations of thermodynamic cycles or energy usage and the one or more pre-repair baselines relate to pre-repair durations of thermodynamic cycles or energy usage and the pre-repair baselines and the post-repair baselines are generated from the measurements of temperatures and electrical currents that characterize performance of the refrigeration system.

11. The apparatus of claim 10, wherein the controller is configured to provide collected measurements captured at the refrigeration system to the analyzer or interactive server after establishing a network connection.

12. The apparatus of claim 10, wherein the optimal level is determined based on mechanical performance and energy efficiency of a reference population of refrigeration systems.

13. The apparatus of claim 10, wherein the measurements are captured at the refrigeration system by one or more smart sensors configured to communicate the measurements through a routable network,
wherein the one or more smart sensors are configured to communicate statistical information based on measurements of performance of a refrigeration system associated with the one or more smart sensors, or
wherein the one or more smart sensors are configured to communicate analytical information based on a statistical analysis of measurements of performance of a refrigeration system associated with the at least one smart sensor.

14. A processor-readable storage medium having one or more instructions which, when executed by at least one processing circuit, cause the apparatus according to claim 10 to perform the steps of the method of claim 1.

## Patentansprüche

1. Verfahren zum Steuern eines Netzwerks von Kühlsystemen, das Folgendes beinhaltet:
Empfangen von an mehreren Kühlsystemen erfassten Messwerten, wobei die Messwerte Messwerte von Temperaturen und elektrischen Strömen umfassen, die die Leistung jedes der mehreren Kühlsysteme charakterisieren (1102);
Bestimmen mindestens eines Kühlsystems der mehreren Kühlsysteme, das unterhalb eines optimalen Niveaus arbeitet (1104); und
Einleiten eines Reparaturprozesses für das mindestens eine Kühlsystem (1106), **gekennzeichnet durch**
Erzeugen einer oder mehrerer Nach-Reparatur-Basislinien, nachdem sich das mindestens eine Kühlsystem nach seiner Reparatur stabilisiert hat, durch Überwachen des mindestens einen Kühlsystems für einen vordefinierten Zeitraum, wobei sich die ein oder mehreren Nach-Reparatur-Basislinien auf Nach-Reparatur-Dauern von thermodynamischen Zyklen oder Energieverbrauch beziehen; und
Vergleichen der ein oder mehreren Nach-Reparatur-Basislinien mit entsprechenden Vor-Reparatur-Basislinien, die aus von dem mindestens einen Kühlsystem erhaltenen Messwerten erzeugt werden, um festzustellen, ob das mindestens eine Kühlsystem für eine vordefinierte Zeitdauer nach der Reparatur des mindestens einen Kühlsystems auf dem optimalen Niveau oder darüber arbeitet (1108), wobei sich die ein oder mehreren Vor-Reparatur-Basislinien auf Vor-Reparatur-Dauern von thermodynamischen Zyklen oder Energieverbrauch beziehen,
wobei das optimale Niveau auf der Basis der Leistung einer in einer Historie früherer Messungen identifizierten Population von Kühlsystemen bestimmt wird, und
wobei die ein oder mehreren Nach-Reparatur-Basislinien und die ein oder mehreren Vor-Reparatur-Basislinien aus den Messwerten von Temperaturen und elektrischen Strömen erzeugt werden, die die Leistung des Kühlsystems charakterisieren.

2. Verfahren nach Anspruch 1, wobei die Leistung unterhalb des optimalen Niveaus auf der Basis eines Vergleichs der Leistung jedes der mehreren Kühlsysteme im Vergleich zur Leistung einer Referenzpopulation von Kühlsystemen bestimmt wird.

3. Verfahren nach Anspruch 1, wobei die Messwerte an den mehreren Kühlsystemen durch mehrere intelligente Sensoren erfasst werden, die zum Übermitteln der Messwerte über ein routingfähiges Kommunikationsnetzwerk oder einen Datenlogger konfiguriert sind.

4. Verfahren nach Anspruch 3, wobei mindestens einer der mehreren intelligenten Sensoren zum Übermitteln statistischer Informationen auf der Basis von Messwerten von Leistung oder Energieverbrauch eines mit dem mindestens einen intelligenten Sensor assoziierten Kühlsystems konfiguriert ist, oder wobei mindestens einer der mehreren intelligenten Sensoren zum Übermitteln analytischer Informationen auf der Basis einer statistischen Analyse von Messwerten der Leistung eines mit dem mindestens einen intelligenten Sensor assoziierten Kühlsystems konfiguriert ist.

5. Verfahren nach Anspruch 1, das ferner das Analysieren der an den mehreren Kühlsystemen erfassten Messwerte beinhaltet, wobei das mindestens eine Kühlsystem, das unterhalb des optimalen Niveaus arbeitet, auf der Basis der Analyse bestimmt wird.

6. Verfahren nach Anspruch 5, wobei das Analysieren der an den mehreren Kühlsystemen erfassten Messwerte das Durchführen einer statistischen Analyse beinhaltet.

7. Verfahren nach Anspruch 1, das ferner Folgendes beinhaltet:
Analysieren der an den mehreren Kühlsystemen erfassten Messwerte, wobei auf der Basis der Analyse festgestellt wird, dass das mindestens eine Kühlsystem für den vordefinierten Zeitraum auf dem optimalen Niveau oder darüber arbeitet.

8. Verfahren nach Anspruch 1, wobei die Messwerte Messwerte von Schwingungen in mindestens einem Kühlsystem umfassen.

9. Verfahren nach Anspruch 1, wobei das Einleiten des Reparaturvorgangs Folgendes beinhaltet:
Bereitstellen einer Reparaturprozedur für einen Reparaturtechniker, wobei die Reparaturprozedur zu ergreifende oder zu unterlassende Tätigkeiten und den Zeitpunkt der zu ergreifenden oder zu unterlassenden Tätigkeiten identifiziert.

10. Vorrichtung zum Verwalten der Reparatur eines Kühlsystems, die Folgendes umfasst:
eine Steuerung (402) mit mindestens einer Verarbeitungsschaltung (404), die einen Prozessor (414) und mindestens eine Sensorsteuerung (406, 408, 410, 412, 426) beinhaltet, konfiguriert zum Verbinden eines oder mehrerer externer Sensorgeräte mit der Steuerung, wobei die mindestens eine Verarbeitungsschaltung zum Sammeln von durch die ein oder mehreren externen Sensorgeräte an einem Kühlsystem erfassten Messwerten konfiguriert ist, wobei die Messwerte Messwerte von Temperaturen und elektrischen Strömen umfassen, die die Leistung des Kühlsystems charakterisieren;
einen Analysator, der mindestens eine Verarbeitungsschaltung umfasst, konfiguriert zum Bestimmen eines aktuellen Leistungsniveaus des Kühlsystems in Bezug auf ein optimales Niveau, das auf der Basis der Leistung einer Population von Kühlsystemen bestimmt wird, die in einer von der Steuerung oder dem Analysator geführten Historie früherer Messungen identifiziert wird; und
einen interaktiven Server, konfiguriert zum Verwalten eines Reparaturprozesses, der eingeleitet wird, wenn der Analysator feststellt, dass die Leistung des Kühlsystems unterhalb des optimalen Niveaus liegt,
**dadurch gekennzeichnet, dass**
der interaktive Server, die Steuerung und der Analysator zusammenarbeiten, um durch Vergleichen von Vor-Reparatur-Basislinien, die aus für das mindestens eine Kühlsystem gewonnenen Messwerten erhalten werden, mit einer oder mehreren Nach-Reparatur-Basislinien, die durch Überwachen des mindestens einen Kühlsystems für eine vordefinierte Zeitdauer erhalten werden, nachdem sich das mindestens eine Kühlsystem nach seiner Reparatur stabilisiert hat, festzustellen, ob das Kühlsystem für eine vorbestimmte Zeitdauer nach Beendigung des Reparaturprozesses auf oder über dem optimalen Niveau arbeitet, und
wobei sich die ein oder mehreren Nach-Reparatur-Basislinien auf Nach-Reparatur-Dauern von thermodynamischen Zyklen oder Energieverbrauch beziehen und die ein oder mehreren Vor-Reparatur-Basislinien sich auf Vor-Reparatur-Dauern von thermodynamischen Zyklen oder Energieverbrauch beziehen und die Vor-Reparatur-Basislinien und die Nach-Reparatur-Basislinien aus den Messwerten von Temperaturen und elektrischen Strömen erzeugt werden, die die Leistung des Kühlsystems charakterisieren.

11. Vorrichtung nach Anspruch 10, wobei die Steuerung so konfiguriert ist, dass sie am Kühlsystem erfasste gesammelte Messungen nach dem Aufbau einer Netzwerkverbindung dem Analysator oder interaktiven Server zuführt.

12. Vorrichtung nach Anspruch 10, wobei das optimale Niveau auf der Basis von mechanischer Leistung und Energieeffizienz einer Referenzpopulation von Kühlsystemen bestimmt wird.

13. Vorrichtung nach Anspruch 10, wobei die Messwerte am Kühlsystem durch einen oder mehrere intelligente Sensoren erfasst werden, die zum Übermitteln der Messwerte über ein routingfähiges Netzwerk konfiguriert sind,
wobei die ein oder mehreren intelligenten Sensoren zum Übermitteln statistischer Informationen konfiguriert sind, die auf Messungen der Leistung eines mit den ein oder mehreren intelligenten Sensoren assoziierten Kühlsystems basieren, oder
wobei die ein oder mehreren intelligenten Sensoren zum Übermitteln analytischer Informationen auf der Basis einer statistischen Analyse von Messungen der Leistung eines mit dem mindestens einen intelligenten Sensor assoziierten Kühlsystems konfiguriert sind.

14. Prozessorlesbares Speichermedium mit einem oder mehreren Befehlen, die bei Ausführung durch mindestens eine Verarbeitungsschaltung bewirken, dass die Vorrichtung nach Anspruch 10 die Schritte des Verfahrens nach Anspruch 1 ausführt.

## Revendications

1. Procédé de commande d'un réseau de systèmes de réfrigération, comprenant :
la réception de mesures capturées au niveau d'une pluralité de systèmes de réfrigération, les mesures incluant des mesures de températures et de courants électriques qui caractérisent des performances de chacun de la pluralité de systèmes de réfrigération (1102) ;
la détermination d'au moins un système de réfrigération de la pluralité des systèmes de réfrigération qui fonctionne en dessous d'un niveau optimal (1104) et
le lancement d'un processus de réparation pour l'au moins un système de réfrigération (1106), **caractérisé par**
la génération d'une ou plusieurs lignes de base après réparation après que l'au moins un système de réfrigération s'est stabilisé après avoir été réparé en surveillant l'au moins un système de réfrigération pendant une période de temps prédéfinie, où les une ou plusieurs lignes de base après réparation se rapportent à des durées après réparation de cycles thermodynamiques ou d'utilisation d'énergie ; et
la comparaison des une ou plusieurs lignes de base après réparation avec des lignes de base avant réparation correspondantes générées à partir de mesures obtenues à partir de l'au moins un système de réfrigération pour déterminer si l'au moins un système de réfrigération fonctionne au niveau optimal ou au-dessus pendant une période de temps prédéfinie après que l'au moins un système de réfrigération a été réparé (1108), où les une ou plusieurs lignes de base avant réparation se rapportent à des durées avant réparation de cycles thermodynamiques ou d'utilisation d'énergie,
où le niveau optimal est déterminé sur la base des performances d'une population de systèmes de réfrigération identifiés dans un historique de mesures antérieures, et
où les une ou plusieurs lignes de base après réparation et les une ou plusieurs lignes de base avant réparation sont générées à partir des mesures de températures et de courants électriques qui caractérisent les performances du système de réfrigération.

2. Procédé selon la revendication 1, où les performances en dessous du niveau optimal sont déterminées sur la base d'une comparaison des performances de chacun de la pluralité de systèmes de réfrigération par comparaison avec des performances d'une population de référence de systèmes de réfrigération.

3. Procédé selon la revendication 1, où les mesures sont capturées au niveau de la pluralité de systèmes de réfrigération par une pluralité de capteurs intelligents configurés pour communiquer les mesures par le biais d'un réseau de communication routable ou d'un enregistreur de données.

4. Procédé selon la revendication 3, où au moins un capteur de la pluralité de capteurs intelligents est configuré pour communiquer des informations statistiques sur la base de mesures de performances ou de consommation d'énergie d'un système de réfrigération associé à l'au moins un capteur intelligent, ou où au moins un capteur de la pluralité de capteurs intelligents est configuré pour communiquer des informations analytiques sur la base d'une analyse statistique de mesures de performances d'un système de réfrigération associé à l'au moins un capteur intelligent.

5. Procédé selon la revendication 1, comprenant en outre l'analyse des mesures capturées au niveau de la pluralité de systèmes de réfrigération, où l'au moins un système de réfrigération qui fonctionne en dessous du niveau optimal est déterminé sur la base de l'analyse.

6. Procédé selon la revendication 5, où l'analyse des mesures capturées au niveau de la pluralité de systèmes de réfrigération inclut la réalisation d'une analyse statistique.

7. Procédé selon la revendication 1, comprenant en outre
l'analyse des mesures capturées au niveau de la pluralité de systèmes de réfrigération, où l'au moins un système de réfrigération est déterminé comme fonctionnant au niveau optimal ou au-dessus pour la période de temps prédéfinie sur la base de l'analyse.

8. Procédé selon la revendication 1, où les mesures incluent des mesures de vibration dans au moins un système de réfrigération.

9. Procédé selon la revendication 1, où le lancement du procédé de réparation comprend :
la fourniture d'une procédure de réparation à un technicien de réparation, la procédure de réparation identifiant des actions à prendre ou à omettre et le moment où les actions doivent être prises ou omises.

10. Appareil pour la gestion d'une réparation d'un système de réfrigération, comprenant :
un dispositif de commande (402) comprenant au moins un circuit de traitement (404) qui inclut un processeur (414) et au moins un dispositif de commande de capteur (406, 408, 410, 412, 426) configuré pour connecter un ou plusieurs dispositifs de capteur externes au dispositif de commande, l'au moins un circuit de traitement étant configuré pour collecter des mesures capturées par les un ou plusieurs dispositifs de capteur externes au niveau d'un système de réfrigération, les mesures incluant des mesures de températures et de courants électriques qui caractérisent des performances du système de réfrigération ;
un analyseur comprenant au moins un circuit de traitement configuré pour déterminer un niveau de performances actuel du système de réfrigération par rapport à un niveau optimal déterminé sur la base des performances d'une population de systèmes de réfrigération identifiés dans un historique de mesures antérieures conservé par le dispositif de commande ou l'analyseur ; et
un serveur interactif configuré pour gérer un processus de réparation lancé lorsque l'analyseur détermine que le système de réfrigération fonctionne en dessous du niveau optimal,
**caractérisé en ce que**
le serveur interactif, le dispositif de commande et l'analyseur coopèrent pour déterminer si le système de réfrigération fonctionne au niveau optimal ou au-dessus pendant une période de temps prédéterminée après l'achèvement du processus de réparation en comparant des lignes de base avant réparation obtenues à partir de mesures prises pour l'au moins un système de réfrigération avec une ou plusieurs lignes de base après réparation obtenues en surveillant l'au moins un système de réfrigération pendant une période de temps prédéfinie après que l'au moins un système de réfrigération s'est stabilisé après avoir été réparé, et
où les une ou plusieurs lignes de base après réparation se rapportent à des durées après réparation de cycles thermodynamiques ou d'utilisation d'énergie et les une ou plusieurs lignes de base avant réparation se rapportent à des durées avant réparation de cycles thermodynamiques ou d'utilisation d'énergie et les lignes de base avant réparation et les lignes de base après réparation sont générées à partir des mesures de températures et de courants électriques qui caractérisent des performances du système de réfrigération.

11. Appareil selon la revendication 10, où le dispositif de commande est configuré pour fournir des mesures collectées capturées au niveau du système de réfrigération à l'analyseur ou au serveur interactif après avoir établi une connexion réseau.

12. Appareil selon la revendication 10, où le niveau optimal est déterminé sur la base des performances mécaniques et de l'efficacité énergétique d'une population de référence de systèmes de réfrigération.

13. Appareil selon la revendication 10, où les mesures sont capturées au niveau du système de réfrigération par un ou plusieurs capteurs intelligents configurés pour communiquer les mesures par le biais d'un réseau routable,
où les un ou plusieurs capteurs intelligents sont configurés pour communiquer des informations statistiques sur la base de mesures de performances d'un système de réfrigération associé aux un ou plusieurs capteurs intelligents, ou
où les un ou plusieurs capteurs intelligents sont configurés pour communiquer des informations analytiques sur la base d'une analyse statistique de mesures de performance d'un système de réfrigération associé au au moins un capteur intelligent.

14. Support de stockage lisible par un processeur ayant une ou plusieurs instructions qui, lorsqu'elles sont exécutées par au moins un circuit de traitement, amènent l'appareil selon la revendication 10 à exécuter les étapes du procédé selon la revendication 1.
